# EUROPEAN PATENT APPLICATION

(11) **EP 4 637 091 A1**
(43) Date of publication of application: **22.10.2025**
(21) Application number: 23913998.3
(22) Date of filing: 04.01.2023
(51) Int. Cl.: H04L 27/00

(54) **COMMUNICATION METHOD AND RELATED DEVICE**

(71) Applicant: Huawei Technologies Co., Ltd., Shenzhen, Guangdong 518129 (CN)
(72) Inventor: GU, Xueqin, Shenzhen, Guangdong 518129 (CN)
(74) Representative: Pfenning, Meinig & Partner mbB
(86) International application number: PCT/CN2023/070517
(87) International publication number: WO 2024/145839

(57) **Abstract**

This application provides a communication method and a related device, to process data of a terminal device on a link between a baseband unit and a radio frequency unit at a granularity of the terminal device, so as to ensure service experience of the terminal device. In the method, the baseband unit performs first processing on downlink data of a first terminal device to obtain first data, and performs second processing on downlink data of a second terminal device to obtain second data; and the baseband unit sends the first data and the second data on the link between the baseband unit and the radio frequency unit, where the first processing is different from the second processing.

## Description

### TECHNICAL FIELD

This application relates to the communication field, and in particular, to a communication method and a related device.

### BACKGROUND

Wireless communication may be transmission communication performed between a plurality of communication nodes without propagation through a conductor or a cable. Generally, a network device and a terminal device may be used as different communication nodes to perform communication in a wireless communication manner.

In a wireless communication scenario, a network device may be deployed in a distributed manner. For example, function entities configured to process signals in the network device are split, some of the function entities are carried on a device, and the other function entities are carried on another device, to improve a coverage capability and deployment flexibility of the network device.

However, in the foregoing implementation process, how to implement efficient data transmission between different function entities in the network device is an urgent technical problem to be resolved.

### SUMMARY

This application provides a communication method and a related device, to process data of a terminal device on a link between a baseband unit and a radio frequency unit at a granularity of the terminal device, so as to ensure service experience of the terminal device.

A first aspect of this application provides a communication method. The method is applied to a baseband unit, and the method is performed by the baseband unit, or the method is performed by some components (such as a processor, a chip, or a chip system) in the baseband unit, or the method may be implemented by a logical module or software that can implement all or some functions of the baseband unit. In the first aspect and possible implementations of the first aspect, an example in which the method is performed by the baseband unit is used for description. In the method, the baseband unit performs first processing on downlink data of a first terminal device to obtain first data, and performs second processing on downlink data of a second terminal device to obtain second data; and the baseband unit sends the first data and the second data on a link between the baseband unit and a radio frequency unit, where the first processing is different from the second processing.

According to the foregoing technical solution, after performing the first processing on the downlink data of the first terminal device to obtain the first data, the baseband unit sends the first data on the link between the baseband unit and the radio frequency unit; and after performing the second processing on the downlink data of the second terminal device to obtain the second data, the baseband unit sends the second data on the link, where the first processing is different from the second processing. In other words, after performing different processing on downlink data of different terminal devices, the baseband unit sends, to the radio frequency unit, downlink data of the different terminal devices that is obtained through the different processing. Therefore, data of a terminal device can be processed on the link between the baseband unit and the radio frequency unit at a granularity of the terminal device, to ensure service experience of the terminal device.

It should be understood that, in this application, the downlink data may be understood as data sent by a network device (the network device includes a radio frequency unit and/or a radio frequency unit) to the terminal device, and uplink data mentioned below may be understood as data sent by the terminal device to the network device.

It should be understood that a quantity of terminal devices corresponding to the first terminal device (or the second terminal device) is not limited in this application. For example, the quantity of terminal devices corresponding to the first terminal device (or the second terminal device) may be 1, or may be greater than 1. When the quantity of terminal devices corresponding to the first terminal device (or the second terminal device) is greater than 1, the first terminal device and the second terminal device may also be understood as different types of terminal devices.

Optionally, the first terminal device and the second terminal device are different terminal devices. For example, the first terminal device and the second terminal device are terminal devices with different code rates, and the first terminal device and the second terminal device are terminal devices with different channel state information.

It should be understood that in this application, the radio frequency unit is a network device having a radio frequency signal processing function, the baseband unit is a network device having a baseband signal processing function, and the radio frequency unit and the baseband unit may have other names.

For example, the radio frequency unit is radio equipment (radio equipment, RE) and the baseband unit is a radio equipment controller (radio equipment controller, REC).

For another example, the radio frequency unit is a remote radio unit (remote radio unit, RRU) and the baseband unit is a building baseband unit (building baseband unit, BBU).

For another example, the radio frequency unit is an active antenna unit (active antenna unit, AAU) and the baseband unit is a BBU.

For another example, the radio frequency unit is a radio unit (radio unit, RU) and the baseband unit is a distributed unit (distributed unit, DU).

Optionally, the link between the baseband unit and the radio frequency unit may be referred to as a fronthaul link, a fronthaul network, or the like.

Optionally, a communication interface between the baseband unit and the radio frequency unit may be referred to as a common public radio interface (common public radio interface, CPRI), an enhanced common public radio interface (enhanced common public radio interface, eCPRI), a fronthaul interface in an open radio access network (open radio access network, ORAN or O-RAN), or another interface name. This is not limited herein.

Optionally, on the link between the baseband unit and the radio frequency unit, the first data and the second data may be carried in a same message, or may be carried in different messages. This is not limited herein.

In a possible implementation of the first aspect, the method further includes: The baseband unit sends first indication information and second indication information, where the first indication information indicates that the first data is obtained by performing the first processing based on the downlink data of the first terminal device, and the second indication information indicates that the second data is obtained by performing the second processing based on the downlink data of the second terminal device. Alternatively, the method further includes: The baseband unit sends first indication information and second indication information, where the first indication information indicates the first processing, and the second indication information indicates the second processing.

According to the foregoing technical solution, in a downlink data processing process, the baseband unit may send the first indication information and the second indication information to the radio frequency unit, so that the radio frequency unit can determine a manner of processing the first data and the second data based on the first indication information and the second indication information, to send downlink data to a terminal device after further processing the received first data and second data.

Optionally, the first indication information and the first data may be carried in a same message, or may be carried in different messages. This is not limited herein. Similarly, the second indication information and the second data may be carried in a same message, or may be carried in different messages. This is not limited herein.

Optionally, the first indication information and the second indication information may also be obtained in another manner. For example, the first indication information and the second indication information may be information preconfigured in the baseband unit and the radio frequency unit, or the first indication information and the second indication information may be information sent by a remote device (for example, an operation management center (operation management center, OMC) or a base station control unit) to the baseband unit and/or the radio frequency unit, or another implementation. This is not limited herein.

A second aspect of this application provides a communication method. The method is applied to a radio frequency unit, and the method is performed by the radio frequency unit, or the method is performed by some components (such as a processor, a chip, or a chip system) in the radio frequency unit, or the method may be implemented by a logical module or software that can implement all or some functions of the radio frequency unit. In the second aspect and possible implementations of the second aspect, an example in which the method is performed by the radio frequency unit is used for description. In the method, the radio frequency unit receives first data and second data on a link between a baseband unit and the radio frequency unit, where the first data is obtained by performing first processing based on downlink data of a first terminal device, the second data is obtained by performing second processing based on downlink data of a second terminal device, and the first processing is different from the second processing.

According to the foregoing technical solution, the first data received by the radio frequency unit is obtained by performing the first processing based on the downlink data of the first terminal device, and the second data received by the radio frequency unit is obtained by performing the second processing based on the downlink data of the second terminal device, where the first processing is different from the second processing. In other words, after performing different processing on downlink data of different terminal devices, the baseband unit sends, to the radio frequency unit, downlink data of the different terminal devices that is obtained through the different processing. Therefore, data of a terminal device can be processed on the link between the baseband unit and the radio frequency unit at a granularity of the terminal device, to ensure service experience of the terminal device.

In a possible implementation of the first aspect or the second aspect, the first processing and the second processing include physical layer processing; and/or the first processing and the second processing include data packet processing.

According to the foregoing technical solution, on the link between the baseband unit and the radio frequency unit, processing performed by the baseband unit on downlink data of a terminal device includes physical layer processing and/or data packet processing. In other words, the baseband unit performs different physical layer processing and/or different data packet processing on data of different terminal devices, to provide a plurality of flexible implementations.

In a possible implementation of the first aspect or the second aspect, when the first processing and the second processing include data packet processing, a quantity of data packets corresponding to the first data is different from a quantity of data packets corresponding to the second data; and/or a time domain resource carrying a data packet corresponding to the first data is different from a time domain resource carrying a data packet corresponding to the second data.

According to the foregoing technical solution, when the first processing and the second processing include data packet processing, the quantity of data packets corresponding to the first data is different from the quantity of data packets corresponding to the second data, so that data packets corresponding to data of different terminal devices are processed in different packet assembly manners, thereby smoothly processing a data stream transmitted on the link between the baseband unit and the radio frequency unit. In addition, when the first processing and the second processing include data packet processing, the time domain resource carrying the data packet corresponding to the first data is different from the time domain resource carrying the data packet corresponding to the second data, so that data of different terminal devices can be transmitted in a staggered manner (for example, when data of a terminal device is transmitted, physical layer processing/packet assembly processing is performed on data of another terminal device), thereby avoiding an excessively large amount of data streams at a same moment on the link between the baseband unit and the radio frequency unit. Therefore, when the first processing and the second processing include data packet processing, transmission bandwidth can be time-division multiplexed by the data of the different terminal devices, to improve transmission bandwidth utilization on the link between the baseband unit and the radio frequency unit.

In a possible implementation of the first aspect or the second aspect, the first processing is determined based on at least one of the following: a transmission code rate of the downlink data of the first terminal device, a type of the first terminal device, or channel state information of the first terminal device; and/or the second processing is determined based on at least one of the following: a transmission code rate of the downlink data of the second terminal device, a type of the second terminal device, or channel state information of the second terminal device.

According to the foregoing technical solution, on the link between the baseband unit and the radio frequency unit, processing performed by the baseband unit on downlink data of a terminal device may be determined based on related information of the terminal device. A plurality of implementations of determining the processing process are provided, to improve flexibility of implementing the solution.

A third aspect of this application provides a communication method. The method is applied to a radio frequency unit, and the method is performed by the radio frequency unit, or the method is performed by some components (such as a processor, a chip, or a chip system) in the radio frequency unit, or the method may be implemented by a logical module or software that can implement all or some functions of the radio frequency unit. In the third aspect and possible implementations of the third aspect, an example in which the method is performed by the radio frequency unit is used for description. In the method, the radio frequency unit receives first data of a first terminal device and second data of a second terminal device on a link between a baseband unit and the radio frequency unit. The radio frequency unit performs third processing on the first data to obtain third data, and the radio frequency unit performs fourth processing on the second data to obtain fourth data, where the third processing is different from the fourth processing.

According to the foregoing technical solution, after the radio frequency unit receives the first data of the first terminal device and the second data of the second terminal device on the link between the baseband unit and the radio frequency unit, the radio frequency unit performs different processing processes on the first data and the second data, to obtain the third data and the fourth data. Therefore, data of a terminal device can be processed on the link between the baseband unit and the radio frequency unit at a granularity of the terminal device, to ensure service experience of the terminal device.

It may be understood that the first data and the second data are downlink data. Therefore, after the radio frequency unit obtains the third data and the fourth data respectively based on the first data and the second data, the radio frequency unit may send corresponding downlink data to the terminal device through an operation such as air interface mapping.

In a possible implementation of the third aspect, the third processing and the fourth processing include physical layer processing; and/or the third processing and the fourth processing include data packet processing.

According to the foregoing technical solution, on the link between the baseband unit and the radio frequency unit, processing performed by the baseband unit on downlink data of a terminal device includes physical layer processing and/or data packet processing. In other words, after the radio frequency unit receives data of different terminal devices, the radio frequency unit performs different physical layer processing and/or different data packet processing on the data of the different terminal devices, to provide a plurality of flexible implementations.

In a possible implementation of the third aspect, when the third processing and the fourth processing include data packet processing, a quantity of data packets corresponding to the first data is different from a quantity of data packets corresponding to the second data; and/or a time domain resource carrying a data packet corresponding to the first data is different from a time domain resource carrying a data packet corresponding to the second data.

According to the foregoing technical solution, when the third processing and the fourth processing include data packet processing, the quantity of data packets corresponding to the first data is different from the quantity of data packets corresponding to the second data, so that data packets corresponding to data of different terminal devices are processed in different packet assembly manners, thereby smoothly processing a data stream transmitted on the link between the baseband unit and the radio frequency unit. In addition, when the third processing and the fourth processing include data packet processing, the time domain resource carrying the data packet corresponding to the first data is different from the time domain resource carrying the data packet corresponding to the second data, so that data of different terminal devices can be transmitted in a staggered manner (for example, when data of a terminal device is transmitted, physical layer processing/packet assembly processing is performed on data of another terminal device), thereby avoiding an excessively large amount of data streams at a same moment on the link between the baseband unit and the radio frequency unit. Therefore, when the third processing and the fourth processing include data packet processing, transmission bandwidth can be time-division multiplexed by the data of the different terminal devices, to improve transmission bandwidth utilization on the link between the baseband unit and the radio frequency unit.

It may be understood that, when a quantity of data packets corresponding to a piece of data (for example, the first data or the second data) received by the radio frequency unit is 1, the radio frequency unit may obtain the data based on the one data packet. When a quantity of data packets corresponding to a piece of data (for example, the first data or the second data) received by the radio frequency unit is N (N is an integer greater than 1), after the radio frequency unit receives the N data packets, the radio frequency unit performs a packet assembly (or concatenation) process on the N packets to obtain the data.

In a possible implementation of the third aspect, the third processing is determined based on at least one of the following: a transmission code rate of downlink data of the first terminal device, a type of the first terminal device, or channel state information of the first terminal device; and/or the fourth processing is determined based on at least one of the following: a transmission code rate of downlink data of the second terminal device, a type of the second terminal device, or channel state information of the second terminal device.

According to the foregoing technical solution, on the link between the baseband unit and the radio frequency unit, processing performed by the baseband unit on downlink data of a terminal device may be determined based on related information of the terminal device. A plurality of implementations of determining the processing process are provided, to improve flexibility of implementing the solution.

In a possible implementation of any one of the first aspect to the third aspect, the physical layer processing includes at least one of the following: encoding, rate matching, scrambling, modulation, layer mapping, precoding, resource element (resource element, RE) mapping, digital beam mapping (beamforming, BF), inverse fast Fourier transform (invert fast Fourier transform, IFFT), cyclic prefix (cyclic prefix, CP) addition, digital-to-analog conversion, or analog BF.

According to the foregoing technical solution, in a downlink data processing process, downlink data sent by the baseband unit to the radio frequency unit is data obtained after the physical layer processing. Physical layer processing performed by the baseband unit on the data of the first terminal device is different from physical layer processing performed by the baseband unit on the data of the second terminal device, so that different physical layer processing processes are more flexibly configured in the baseband unit and the radio frequency unit. In other words, in the downlink data processing process, the baseband unit (and/or the radio frequency unit) may perform different physical layer processing processes for data of different terminal devices. Therefore, compared with a same physical layer processing process used for the data of the different terminal devices, in the foregoing technical solution, differentiated configuration can be implemented on a physical layer processing process at a granularity of a terminal device, to improve data transmission efficiency of a part of terminal devices, thereby improving user experience.

It may be understood that, when some physical layer processing is performed on data of the terminal device that is sent by the baseband unit to the radio frequency unit, after the radio frequency unit receives the data of the terminal device from the baseband unit, the radio frequency unit may perform other physical layer processing on the data of the terminal device.

For example, a transmission interface between the baseband unit and the radio frequency unit is eCPRI category (category, Cat) D/E/F. Processing (that is, the first processing or the second processing mentioned above) such as encoding, rate matching, and scrambling is performed on the data of the terminal device that is sent by the baseband unit to the radio frequency unit. After the radio frequency unit receives the data of the terminal device from the baseband unit, the radio frequency unit may perform processing (that is, the third processing or the fourth processing mentioned above) such as modulation, layer mapping, precoding, RE mapping, digital BF, IFFT, CP addition, digital-to-analog conversion, and analog BF on the data of the terminal device.

For another example, a transmission interface between the baseband unit and the radio frequency unit is a CPRI. Processing (that is, the first processing or the second processing mentioned above) such as encoding, rate matching, scrambling, modulation, layer mapping, precoding, RE mapping, digital BF, IFFT, and CP addition is performed on the data of the terminal device that is sent by the baseband unit to the radio frequency unit. After the radio frequency unit receives the data of the terminal device from the baseband unit, the radio frequency unit may perform processing (that is, the third processing or the fourth processing mentioned above) such as digital-to-analog conversion and analog BF on the data of the terminal device.

It should be noted that, in this application, any one or more pieces of physical layer processing (that is, the first processing or the second processing mentioned above) may be performed on the data of the terminal device that is sent by the baseband unit to the radio frequency unit, including but not limited to physical layer processing of the baseband unit corresponding to a current eCPRI Cat A/B/C/D/E/F interface and physical layer processing of the baseband unit corresponding to a current CPRI, and may further include another implementation.

For example, the data of the terminal device that is sent by the baseband unit to the radio frequency unit may be encoded, so that the radio frequency unit subsequently performs other physical layer processing.

For another example, encoding and rate matching may be performed on the data of the terminal device that is sent by the baseband unit to the radio frequency unit, so that the radio frequency unit subsequently performs other physical layer processing.

In a possible implementation of either of the second aspect and the third aspect, the method further includes: The radio frequency unit receives first indication information and second indication information, where the first indication information indicates that the first data is obtained by performing the first processing based on the downlink data of the first terminal device, and the second indication information indicates that the second data is obtained by performing the second processing based on the downlink data of the second terminal device. Alternatively, the method further includes: The radio frequency unit receives first indication information and second indication information, where the first indication information indicates the first processing, and the second indication information indicates the second processing.

According to the foregoing technical solution, in a downlink data processing process, the radio frequency unit may receive the first indication information and the second indication information from the baseband unit, so that the radio frequency unit can determine a manner of processing the first data and the second data based on the first indication information and the second indication information, to send downlink data to a terminal device after further processing the received first data and second data.

A fourth aspect of this application provides a communication method. The method is applied to a radio frequency unit, and the method is performed by the radio frequency unit, or the method is performed by some components (such as a processor, a chip, or a chip system) in the radio frequency unit, or the method may be implemented by a logical module or software that can implement all or some functions of the radio frequency unit. In the fourth aspect and possible implementations of the fourth aspect, an example in which the method is performed by the radio frequency unit is used for description. In the method, the radio frequency unit performs fifth processing on uplink data of a first terminal device to obtain fifth data, and performs sixth processing on uplink data of a second terminal device to obtain sixth data; and the baseband unit sends the fifth data and the sixth data on a link between a baseband unit and the radio frequency unit, where the fifth processing is different from the sixth processing.

According to the foregoing technical solution, after performing the fifth processing on the uplink data of the first terminal device to obtain the fifth data, the radio frequency unit sends the fifth data on the link between the baseband unit and the radio frequency unit; and after performing the sixth processing on the uplink data of the second terminal device to obtain the sixth data, the radio frequency unit sends the sixth data on the link, where the fifth processing is different from the sixth processing. In other words, after performing different processing on uplink data of different terminal devices, the radio frequency unit sends, to the baseband unit, uplink data of the different terminal devices that is obtained through the different processing. Therefore, data of a terminal device can be processed on the link between the baseband unit and the radio frequency unit at a granularity of the terminal device, to ensure service experience of the terminal device.

Optionally, on the link between the baseband unit and the radio frequency unit, the fifth data and the sixth data may be carried in a same message, or may be carried in different messages. This is not limited herein.

In a possible implementation of the fourth aspect, the method further includes: The radio frequency unit sends first indication information and second indication information, where the first indication information indicates that the fifth data is obtained by performing the fifth processing based on the uplink data of the first terminal device, and the second indication information indicates that the sixth data is obtained by performing the sixth processing based on the uplink data of the second terminal device; or the radio frequency unit receives the first indication information and the second indication information. Alternatively, the method further includes: The radio frequency unit sends first indication information and second indication information, where the first indication information indicates the fifth processing, and the second indication information indicates the sixth processing.

According to the foregoing technical solution, in an uplink data processing process, both the radio frequency unit and the baseband unit may determine a manner of processing uplink data on the link between the radio frequency unit and the baseband unit. In addition, based on transmission of the first indication information and the second indication information, the radio frequency unit and the baseband unit can determine a manner of processing the uplink data on the link, so that the radio frequency unit and the baseband unit can reach a consensus understanding on processing of the uplink data, to avoid a communication error.

Optionally, the first indication information and the first data may be carried in a same message, or may be carried in different messages. This is not limited herein. Similarly, the second indication information and the second data may be carried in a same message, or may be carried in different messages. This is not limited herein.

Optionally, the first indication information and the second indication information may also be obtained in another manner. For example, the first indication information and the second indication information may be information sent by a remote device (for example, an operation management center (Operation Management Center, OMC) or a base station control unit) to the baseband unit and/or the radio frequency unit, or another implementation. This is not limited herein.

A fifth aspect of this application provides a communication method. The method is applied to a baseband unit, and the method is performed by the baseband unit, or the method is performed by some components (such as a processor, a chip, or a chip system) in the baseband unit, or the method may be implemented by a logical module or software that can implement all or some functions of the baseband unit. In the fifth aspect and possible implementations of the fifth aspect, an example in which the method is performed by the baseband unit is used for description. In the method, the baseband unit receives fifth data and sixth data on a link between the baseband unit and a radio frequency unit, where the fifth data is obtained by performing fifth processing based on uplink data of a first terminal device, the sixth data is obtained by performing sixth processing based on uplink data of a second terminal device, and the fifth processing is different from the sixth processing.

According to the foregoing technical solution, the fifth data received by the baseband unit is obtained by performing the fifth processing based on the uplink data of the first terminal device, and the sixth data received by the baseband unit is obtained by performing the sixth processing based on the uplink data of the second terminal device, where the fifth processing is different from the sixth processing. In other words, after performing different processing on uplink data of different terminal devices, the radio frequency unit sends, to the baseband unit, uplink data of the different terminal devices that is obtained through the different processing. Therefore, data of a terminal device can be processed on the link between the baseband unit and the radio frequency unit at a granularity of the terminal device, to ensure service experience of the terminal device.

In a possible implementation of the fourth aspect or the fifth aspect, the fifth processing and the sixth processing include physical layer processing; and/or the fifth processing and the sixth processing include data packet processing.

According to the foregoing technical solution, on the link between the baseband unit and the radio frequency unit, processing performed by the baseband unit on uplink data of a terminal device includes physical layer processing and/or data packet processing. In other words, the radio frequency unit performs different physical layer processing and/or different data packet processing on data of different terminal devices, to provide a plurality of flexible implementations.

In a possible implementation of the fourth aspect or the fifth aspect, when the fifth processing and the sixth processing include data packet processing, a quantity of data packets corresponding to the fifth data is different from a quantity of data packets corresponding to the sixth data; and/or a time domain resource carrying a data packet corresponding to the fifth data is different from a time domain resource carrying the data packet corresponding to the sixth data.

According to the foregoing technical solution, when the fifth processing and the sixth processing include data packet processing, the quantity of data packets corresponding to the fifth data is different from the quantity of data packets corresponding to the sixth data, so that data packets corresponding to data of different terminal devices are processed in different packet assembly manners, thereby smoothly processing a data stream transmitted on the link between the baseband unit and the radio frequency unit. In addition, when the fifth processing and the sixth processing include data packet processing, the time domain resource carrying the data packet corresponding to the fifth data is different from the time domain resource carrying the data packet corresponding to the sixth data, so that data of different terminal devices can be transmitted in a staggered manner (for example, when data of a terminal device is transmitted, physical layer processing/packet assembly processing is performed on data of another terminal device), thereby avoiding an excessively large amount of data streams at a same moment on the link between the baseband unit and the radio frequency unit. Therefore, when the fifth processing and the sixth processing include data packet processing, transmission bandwidth can be time-division multiplexed by the data of the different terminal devices, to improve transmission bandwidth utilization on the link between the baseband unit and the radio frequency unit.

In a possible implementation of the fourth aspect or the fifth aspect, the fifth processing is determined based on at least one of the following: a transmission code rate of the uplink data of the first terminal device, a type of the first terminal device, or channel state information of the first terminal device; and/or the sixth processing is determined based on at least one of the following: a transmission code rate of the uplink data of the second terminal device, a type of the second terminal device, or channel state information of the second terminal device.

According to the foregoing technical solution, on the link between the baseband unit and the radio frequency unit, processing performed by the baseband unit on uplink data of a terminal device may be determined based on related information of the terminal device. A plurality of implementations of determining the processing process are provided, to improve flexibility of implementing the solution.

A sixth aspect of this application provides a communication method. The method is applied to a baseband unit, and the method is performed by the baseband unit, or the method is performed by some components (such as a processor, a chip, or a chip system) in the baseband unit, or the method may be implemented by a logical module or software that can implement all or some functions of the baseband unit. In the fifth aspect and possible implementations of the fifth aspect, an example in which the method is performed by the baseband unit is used for description. In the method, the baseband unit receives fifth data of a first terminal device and sixth data of a second terminal device on a link between the baseband unit and a radio frequency unit. The baseband unit performs seventh processing on the fifth data to obtain seventh data, and the baseband unit performs eighth processing on the sixth data to obtain eighth data, where the seventh processing is different from the eighth processing.

According to the foregoing technical solution, after the baseband unit receives the fifth data of the first terminal device and the sixth data of the second terminal device on the link between the baseband unit and the radio frequency unit, the baseband unit performs different processing processes on the fifth data and the sixth data, to obtain the seventh data and the eighth data. Therefore, data of a terminal device can be processed on the link between the baseband unit and the radio frequency unit at a granularity of the terminal device, to ensure service experience of the terminal device.

It may be understood that the fifth data and the sixth data are uplink data. Therefore, after the baseband unit obtains the seventh data and the eighth data respectively based on the fifth data and the sixth data, the baseband unit may locally process the uplink data (or the baseband unit sends the uplink data to another device, for example, an access network device, a core network device, or another terminal device).

In a possible implementation of the sixth aspect, the seventh processing and the eighth processing include physical layer processing; and/or the seventh processing and the eighth processing include data packet processing.

According to the foregoing technical solution, on the link between the baseband unit and the radio frequency unit, processing performed by the radio frequency unit on uplink data of a terminal device includes physical layer processing and/or data packet processing. In other words, after the baseband unit receives data of different terminal devices, the baseband unit performs different physical layer processing and/or different data packet processing on the data of the different terminal devices, to provide a plurality of flexible implementations.

In a possible implementation of the sixth aspect, when the seventh processing and the eighth processing include data packet processing, a quantity of data packets corresponding to the fifth data is different from a quantity of data packets corresponding to the sixth data; and/or a time domain resource carrying a data packet corresponding to the fifth data is different from a time domain resource carrying a data packet corresponding to the sixth data.

According to the foregoing technical solution, when the seventh processing and the eighth processing include data packet processing, the quantity of data packets corresponding to the first data is different from the quantity of data packets corresponding to the second data, so that data packets corresponding to data of different terminal devices are processed in different packet assembly manners, thereby smoothly processing a data stream transmitted on the link between the baseband unit and the radio frequency unit. In addition, when the seventh processing and the eighth processing include data packet processing, the time domain resource carrying the data packet corresponding to the first data is different from the time domain resource carrying the data packet corresponding to the second data, so that data of different terminal devices can be transmitted in a staggered manner (for example, when data of a terminal device is transmitted, physical layer processing/packet assembly processing is performed on data of another terminal device), thereby avoiding an excessively large amount of data streams at a same moment on the link between the baseband unit and the radio frequency unit. Therefore, when the seventh processing and the eighth processing include data packet processing, transmission bandwidth can be time-division multiplexed by the data of the different terminal devices, to improve transmission bandwidth utilization on the link between the baseband unit and the radio frequency unit.

It may be understood that, when a quantity of data packets corresponding to a piece of data (for example, the fifth data or the sixth data) received by the baseband unit is 1, the baseband unit may obtain the data based on the data packet. When a quantity of data packets corresponding to a piece of data (for example, the fifth data or the sixth data) received by the baseband unit is N (N is an integer greater than 1), after the baseband unit receives the N data packets, the baseband unit performs a packet assembly (or concatenation) process on the N data packets to obtain the data.

In a possible implementation of the sixth aspect, the seventh processing is determined based on at least one of the following: a transmission code rate of uplink data of the first terminal device, a type of the first terminal device, or channel state information of the first terminal device; and/or the eighth processing is determined based on at least one of the following: a transmission code rate of uplink data of the second terminal device, a type of the second terminal device, or channel state information of the second terminal device.

According to the foregoing technical solution, on the link between the baseband unit and the radio frequency unit, processing performed by the baseband unit on downlink data of a terminal device may be determined based on related information of the terminal device. A plurality of implementations of determining the processing process are provided, to improve flexibility of implementing the solution.

In a possible implementation of any one of the fourth aspect to the sixth aspect, the physical layer processing includes at least one of the following: decoding, de-rate matching, descrambling, demodulation, inverse discrete Fourier transform (inverse discrete Fourier transform, IDFT), channel equalization, RE demapping, digital BF, fast Fourier transform (fast Fourier transform, FFT), CP removal, analog-to-digital conversion, or analog BF.

According to the foregoing technical solution, in an uplink data processing process, uplink data sent by the radio frequency unit to the baseband unit is data obtained after the physical layer processing. Physical layer processing performed by the radio frequency unit on the data of the first terminal device is different from physical layer processing performed by the radio frequency unit on the data of the second terminal device, so that different physical layer processing processes are more flexibly configured in the baseband unit and the radio frequency unit. In other words, in the uplink data processing process, the baseband unit (and/or the radio frequency unit) may perform different physical layer processing processes for data of different terminal devices. Therefore, compared with a same physical layer processing process used for the data of the different terminal devices, in the foregoing technical solution, differentiated configuration can be implemented on a physical layer processing process at a granularity of a terminal device, to improve data transmission efficiency of a part of terminal devices, thereby improving user experience.

It may be understood that, when some physical layer processing is performed on data of the terminal device that is sent by the radio frequency unit to the baseband unit, after the baseband unit receives the data of the terminal device from the radio frequency unit, the baseband unit may perform other physical layer processing on the data of the terminal device.

For example, a transmission interface between the baseband unit and the radio frequency unit is eCPRI category (category, Cat) D. Processing (that is, the fifth processing or the sixth processing mentioned above) such as analog BF, analog-to-digital conversion, CP removal, FFT, digital BF, RE demapping, channel equalization, and IDFT is performed on the data of the terminal device that is sent by the radio frequency unit to the baseband unit. After the baseband unit receives the data of the terminal device from the radio frequency unit, the baseband unit may perform processing (that is, the seventh processing or the eighth processing mentioned above) such as demodulation, descrambling, de-rate matching, and decoding on the data of the terminal device.

For another example, a transmission interface between the baseband unit and the radio frequency unit is a CPRI. Processing (that is, the fifth processing or the sixth processing mentioned above) such as analog BF and analog-to-digital conversion is performed on the data of the terminal device that is sent by the radio frequency unit to the baseband unit. After the baseband unit receives the data of the terminal device from the radio frequency unit, the baseband unit may perform processing (that is, the seventh processing or the eighth processing mentioned above) such as CP removal, FFT, digital BF, RE demapping, channel equalization, and IDFT on the data of the terminal device.

It should be noted that, in this application, any one or more pieces of physical layer processing (that is, the fifth processing or the sixth processing mentioned above) may be performed on the data of the terminal device that is sent by the radio frequency unit to the baseband unit, including but not limited to physical layer processing of the baseband unit corresponding to a current eCPRI Cat A/B/C/D/E/F interface and physical layer processing of the radio frequency unit corresponding to a current CPRI, and may further include another implementation.

For example, analog BF may be performed on the data of the terminal device that is sent by the radio frequency unit to the baseband unit, so that the radio frequency unit subsequently performs other physical layer processing.

For another example, analog BF, analog-to-digital conversion, and FFT/CP removal may be performed on the data of the terminal device that is sent by the radio frequency unit to the baseband unit, so that the radio frequency unit subsequently performs other physical layer processing.

In a possible implementation of any one of the fourth aspect to the sixth aspect, the method further includes: The baseband unit sends first indication information and second indication information to the radio frequency unit (that is, the radio frequency unit receives the first indication information and the second indication information from the baseband unit), where the first indication information indicates that the fifth data is obtained by performing the fifth processing based on the uplink data of the first terminal device, and the second indication information indicates that the sixth data is obtained by performing the sixth processing based on the uplink data of the second terminal device; or the radio frequency unit sends the first indication information and the second indication information to the baseband unit (that is, the baseband unit receives the first indication information and the second indication information from the radio frequency unit). Alternatively, the method further includes: The baseband unit sends first indication information and second indication information to the radio frequency unit, where the first indication information indicates the fifth processing, and the second indication information indicates the sixth processing; or the radio frequency unit sends the first indication information and the second indication information to the baseband unit.

According to the foregoing technical solution, in an uplink data processing process, both the radio frequency unit and the baseband unit may determine a manner of processing uplink data on the link between the radio frequency unit and the baseband unit. In addition, based on transmission of the first indication information and the second indication information, the radio frequency unit and the baseband unit can determine a manner of processing the uplink data on the link, so that the radio frequency unit and the baseband unit can reach a consensus understanding on processing of the uplink data, to avoid a communication error.

A seventh aspect of this application provides a communication apparatus. The communication apparatus can implement the method according to any one of the first aspect or the possible implementations of the first aspect. The communication apparatus includes a corresponding unit or module configured to perform the method. The unit or module included in the communication apparatus can be implemented by software and/or hardware. For example, the apparatus may be a baseband unit, or the apparatus may be a component (for example, a processor, a chip, or a chip system) in the baseband unit, or the apparatus may be a logic module or software that can implement all or some functions of the baseband unit.

The communication apparatus includes a processing module and a transceiver module. The processing module is configured to: perform first processing on downlink data of a first terminal device to obtain first data, and perform second processing on downlink data of a second terminal device to obtain second data. The transceiver module is configured to send the first data and the second data on a link between the baseband unit and a radio frequency unit. The first processing is different from the second processing.

In a possible implementation of the seventh aspect, the transceiver module is further configured to send first indication information and second indication information, where the first indication information indicates that the first data is obtained by performing the first processing based on the downlink data of the first terminal device, and the second indication information indicates that the second data is obtained by performing the second processing based on the downlink data of the second terminal device.

An eighth aspect of this application provides a communication apparatus. The communication apparatus can implement the method according to any one of the second aspect or the possible implementations of the second aspect. The communication apparatus includes a corresponding unit or module configured to perform the method. The unit or module included in the communication apparatus can be implemented by software and/or hardware. For example, the apparatus may be a radio frequency unit, or the apparatus may be a component (for example, a processor, a chip, or a chip system) in the radio frequency unit, or the apparatus may be a logical module or software that can implement all or some functions of the radio frequency unit.

The communication apparatus includes a processing module and a transceiver module. The processing module is configured to control the transceiver module to receive first data and second data on a link between a baseband unit and the radio frequency unit, where the first data is obtained by performing first processing based on downlink data of a first terminal device, the second data is obtained by performing second processing based on downlink data of a second terminal device, and the first processing is different from the second processing.

In a possible implementation of the seventh aspect or the eighth aspect, the first processing and the second processing include physical layer processing; and/or the first processing and the second processing include data packet processing.

In a possible implementation of the seventh aspect or the eighth aspect, when the first processing and the second processing include data packet processing, a quantity of data packets corresponding to the first data is different from a quantity of data packets corresponding to the second data; and/or a time domain resource carrying a data packet corresponding to the first data is different from a time domain resource carrying the data packet corresponding to the second data.

In a possible implementation of the seventh aspect or the eighth aspect, the first processing is determined based on at least one of the following: a transmission code rate of the downlink data of the first terminal device, a type of the first terminal device, or channel state information of the first terminal device; and/or the second processing is determined based on at least one of the following: a transmission code rate of the downlink data of the second terminal device, a type of the second terminal device, or channel state information of the second terminal device.

A ninth aspect of this application provides a communication apparatus. The communication apparatus can implement the method according to any one of the third aspect or the possible implementations of the third aspect. The communication apparatus includes a corresponding unit or module configured to perform the method. The unit or module included in the communication apparatus can be implemented by software and/or hardware. For example, the apparatus may be a radio frequency unit, or the apparatus may be a component (for example, a processor, a chip, or a chip system) in the radio frequency unit, or the apparatus may be a logical module or software that can implement all or some functions of the radio frequency unit.

The communication apparatus includes a processing module and a transceiver module. The transceiver module is configured to receive first data of a first terminal device and second data of a second terminal device on a link between a baseband unit and the radio frequency unit. The processing module is configured to: perform third processing on the first data to obtain third data, and perform fourth processing on the second data to obtain fourth data, where the third processing is different from the fourth processing.

In a possible implementation of the ninth aspect, the third processing and the fourth processing include physical layer processing; and/or the third processing and the fourth processing include data packet processing.

In a possible implementation of the ninth aspect, when the third processing and the fourth processing include data packet processing, a quantity of data packets corresponding to the first data is different from a quantity of data packets corresponding to the second data; and/or a time domain resource carrying a data packet corresponding to the first data is different from a time domain resource carrying a data packet corresponding to the second data.

In a possible implementation of the ninth aspect, the third processing is determined based on at least one of the following: a transmission code rate of downlink data of the first terminal device, a type of the first terminal device, or channel state information of the first terminal device; and/or the fourth processing is determined based on at least one of the following: a transmission code rate of downlink data of the second terminal device, a type of the second terminal device, or channel state information of the second terminal device.

In a possible implementation of any one of the seventh aspect to the ninth aspect, the physical layer processing includes at least one of the following: encoding, rate matching, scrambling, modulation, layer mapping, precoding, resource element RE mapping, digital beam mapping BF, inverse fast Fourier transform IFFT, cyclic prefix CP addition, digital-to-analog conversion, and analog BF.

In a possible implementation of any one of the seventh aspect to the ninth aspect, the transceiver module is further configured to receive first indication information and second indication information, where the first indication information indicates that the first data is obtained by performing the first processing based on the downlink data of the first terminal device, and the second indication information indicates that the second data is obtained by performing the second processing based on the downlink data of the second terminal device.

A tenth aspect of this application provides a communication apparatus. The communication apparatus can implement the method according to any one of the fourth aspect or the possible implementations of the fourth aspect. The communication apparatus includes a corresponding unit or module configured to perform the method. The unit or module included in the communication apparatus can be implemented by software and/or hardware. For example, the apparatus may be a radio frequency unit, or the apparatus may be a component (for example, a processor, a chip, or a chip system) in the radio frequency unit, or the apparatus may be a logical module or software that can implement all or some functions of the radio frequency unit.

The communication apparatus includes a processing module and a transceiver module. The processing module is configured to: perform fifth processing on uplink data of a first terminal device to obtain fifth data, and perform sixth processing on uplink data of a second terminal device to obtain sixth data. The transceiver module is configured to send the fifth data and the sixth data on a link between a baseband unit and the radio frequency unit, where the fifth processing is different from the sixth processing.

In a possible implementation of the tenth aspect, the transceiver module is further configured to: send first indication information and second indication information, where the first indication information indicates that the fifth data is obtained by performing the fifth processing based on the uplink data of the first terminal device, and the second indication information indicates that the sixth data is obtained by performing the sixth processing based on the uplink data of the second terminal device; or receive the first indication information and the second indication information.

An eleventh aspect of this application provides a communication apparatus. The communication apparatus can implement the method according to any one of the fifth aspect or the possible implementations of the fifth aspect. The communication apparatus includes a corresponding unit or module configured to perform the method. The unit or module included in the communication apparatus can be implemented by software and/or hardware. For example, the apparatus may be a baseband unit, or the apparatus may be a component (for example, a processor, a chip, or a chip system) in the baseband unit, or the apparatus may be a logic module or software that can implement all or some functions of the baseband unit.

The communication apparatus includes a processing module and a transceiver module. The processing module is configured to control the transceiver module to receive fifth data and sixth data on a link between the baseband unit and a radio frequency unit, where the fifth data is obtained by performing fifth processing based on uplink data of a first terminal device, the sixth data is obtained by performing sixth processing based on uplink data of a second terminal device, and the fifth processing is different from the sixth processing.

In a possible implementation of the tenth aspect or the eleventh aspect, the fifth processing and the sixth processing include physical layer processing; and/or the fifth processing and the sixth processing include data packet processing.

In a possible implementation of the tenth aspect or the eleventh aspect, when the fifth processing and the sixth processing include data packet processing, a quantity of data packets corresponding to the fifth data is different from a quantity of data packets corresponding to the sixth data; and/or a time domain resource carrying a data packet corresponding to the fifth data is different from a time domain resource carrying a data packet corresponding to the sixth data.

In a possible implementation of the tenth aspect or the eleventh aspect, the fifth processing is determined based on at least one of the following: a transmission code rate of the uplink data of the first terminal device, a type of the first terminal device, or channel state information of the first terminal device; and/or the sixth processing is determined based on at least one of the following: a transmission code rate of the uplink data of the second terminal device, a type of the second terminal device, or channel state information of the second terminal device.

A twelfth aspect of this application provides a communication apparatus. The communication apparatus can implement the method according to any one of the sixth aspect or the possible implementations of the sixth aspect. The communication apparatus includes a corresponding unit or module configured to perform the method. The unit or module included in the communication apparatus can be implemented by software and/or hardware. For example, the apparatus may be a baseband unit, or the apparatus may be a component (for example, a processor, a chip, or a chip system) in the baseband unit, or the apparatus may be a logic module or software that can implement all or some functions of the baseband unit.

The communication apparatus includes a processing module and a transceiver module. The transceiver module is configured to receive fifth data of a first terminal device and sixth data of a second terminal device on a link between the baseband unit and a radio frequency unit. The processing module is configured to: perform seventh processing on the fifth data to obtain seventh data, and perform eighth processing on the sixth data to obtain eighth data, where the seventh processing is different from the eighth processing.

In a possible implementation of the twelfth aspect, the seventh processing and the eighth processing include physical layer processing; and/or the seventh processing and the eighth processing include data packet processing.

In a possible implementation of the twelfth aspect, when the seventh processing and the eighth processing include data packet processing, a quantity of data packets corresponding to the fifth data is different from a quantity of data packets corresponding to the sixth data; and/or a time domain resource carrying a data packet corresponding to the fifth data is different from a time domain resource carrying a data packet corresponding to the sixth data.

In a possible implementation of the twelfth aspect, the seventh processing is determined based on at least one of the following: a transmission code rate of uplink data of the first terminal device, a type of the first terminal device, or channel state information of the first terminal device; and/or the eighth processing is determined based on at least one of the following: a transmission code rate of uplink data of the second terminal device, a type of the second terminal device, or channel state information of the second terminal device.

In a possible implementation of any one of the tenth aspect to the twelfth aspect, the physical layer processing includes at least one of the following: decoding, de-rate matching, descrambling, demodulation, inverse discrete Fourier transform IDFT, channel equalization, RE demapping, digital BF, fast Fourier transform FFT, CP removal, analog-to-digital conversion, or analog BF.

In a possible implementation of any one of the tenth aspect to the twelfth aspect, the transceiver module is further configured to receive first indication information and second indication information, where the first indication information indicates that the fifth data is obtained by performing the fifth processing based on the uplink data of the first terminal device, and the second indication information indicates that the sixth data is obtained by performing the sixth processing based on the uplink data of the second terminal device; or the transceiver module is further configured to send the first indication information and the second indication information.

A thirteenth aspect of this application provides a communication apparatus, including at least one processor. The at least one processor is coupled to a memory, and the processor is configured to perform the method according to any one of the first aspect or the possible implementations of the first aspect.

For example, the memory is configured to store a program or instructions, and the at least one processor is configured to execute the program or the instructions, so that the apparatus implements the method according to any one of the first aspect or the possible implementations of the first aspect.

A fourteenth aspect of this application provides a communication apparatus, including at least one processor. The at least one processor is coupled to a memory, and the processor is configured to perform the method according to any one of the second aspect or the possible implementations of the second aspect.

For example, the memory is configured to store a program or instructions, and the at least one processor is configured to execute the program or the instructions, so that the apparatus implements the method according to any one of the second aspect or the possible implementations of the second aspect.

A fifteenth aspect of this application provides a communication apparatus, including at least one processor. The at least one processor is coupled to a memory, and the processor is configured to perform the method according to any one of the third aspect or the possible implementations of the third aspect.

For example, the memory is configured to store a program or instructions, and the at least one processor is configured to execute the program or the instructions, so that the apparatus implements the method according to any one of the third aspect or the possible implementations of the third aspect.

A sixteenth aspect of this application provides a communication apparatus, including at least one processor. The at least one processor is coupled to a memory, and the processor is configured to perform the method according to any one of the fourth aspect or the possible implementations of the fourth aspect.

For example, the memory is configured to store a program or instructions, and the at least one processor is configured to execute the program or the instructions, so that the apparatus implements the method according to any one of the fourth aspect or the possible implementations of the fourth aspect.

A seventeenth aspect of this application provides a communication apparatus, including at least one processor. The at least one processor is coupled to a memory, and the processor is configured to perform the method according to any one of the fifth aspect or the possible implementations of the fifth aspect.

For example, the memory is configured to store a program or instructions, and the at least one processor is configured to execute the program or the instructions, so that the apparatus implements the method according to any one of the fifth aspect or the possible implementations of the fifth aspect.

An eighteenth aspect of this application provides a communication apparatus, including at least one processor. The at least one processor is coupled to a memory, and the processor is configured to perform the method according to any one of the sixth aspect or the possible implementations of the sixth aspect.

For example, the memory is configured to store a program or instructions, and the at least one processor is configured to execute the program or the instructions, so that the apparatus implements the method according to any one of the sixth aspect or the possible implementations of the sixth aspect.

A nineteenth aspect of this application provides a communication apparatus, including at least one logic circuit and an input/output interface. The logic circuit is configured to perform the method according to any one of the possible implementations of any one of the first aspect to the sixth aspect.

A twentieth aspect of this application provides a computer-readable storage medium. The computer-readable storage medium is configured to store one or more computer executable instructions. When the computer executable instructions are executed by a processor, the processor performs the method according to any one of the possible implementations of the first aspect to the sixth aspect.

A twenty-first aspect of this application provides a computer program product (or referred to as a computer program). When the computer program product is executed by a processor, the processor performs the method according to any one of the possible implementations of any one of the first aspect to the sixth aspect.

A twenty-second aspect of this application provides a chip system. The chip system includes at least one processor, configured to support a communication apparatus in implementing a function in any one of the possible implementations of any one of the first aspect to the sixth aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A twenty-third aspect of this application provides a communication system. The communication system includes the communication apparatus according to the seventh aspect and the call apparatus according to the eighth aspect, or the communication system includes the communication apparatus according to the seventh aspect and the communication apparatus according to the ninth aspect, or the communication system includes the communication apparatus according to the tenth aspect and the communication apparatus according to the eleventh aspect, or the communication system includes the communication apparatus according to the tenth aspect and the communication apparatus according to the twelfth aspect, or the communication system includes the communication apparatus according to the thirteenth aspect and the communication apparatus according to the fourteenth aspect, or the communication system includes the communication apparatus according to the thirteenth aspect and the communication apparatus according to the fifteenth aspect, or the communication system includes the communication apparatus according to the sixteenth aspect and the communication apparatus according to the seventeenth aspect, or the communication system includes the communication apparatus according to the sixteenth aspect and the communication apparatus according to the eighteenth aspect.

For technical effects brought by any design of the seventh aspect to the twenty-third aspect, refer to technical effects brought by different designs of the first aspect to the sixth aspect. Details are not described herein again.

### BRIEF DESCRIPTION OF DRAWINGS

FIG. 1 to FIG. 3 are some diagrams of an application scenario according to this application;
FIG. 4 to FIG. 8 are some diagrams of a communication method according to this application; and
FIG. 9 to FIG. 11 are some diagrams of a communication apparatus according to this application.

### DESCRIPTION OF EMBODIMENTS

The following describes technical solutions of this application with reference to accompanying drawings. All other solutions obtained by a person skilled in the art based on this application without creative efforts shall fall within the protection scope of this application.

Some terms in this application are first described, to help a person skilled in the art have a better understanding.
(1) Terminal device: may be a wireless terminal device that can receive scheduling and indication information of a network device. The wireless terminal device may be a device that provides a user with voice and/or data connectivity, or a handheld device with a wireless connection function, or another processing device connected to a wireless modem.

The terminal device may communicate with one or more core networks or the Internet through a radio access network (radio access network, RAN). The terminal device may also be referred to as a terminal, a user equipment (user equipment, UE), a mobile station, a mobile terminal, or the like. The terminal device may be widely applied to various scenarios, for example, device-to-device (device-to-device, D2D), vehicle-to-everything (vehicle-to-everything, V2X) communication, machine-type communication (machine-type communication, MTC), internet of things (internet of things, IoT), ultra-reliable and low-latency communication (ultra-reliable and low-latency communication, URLLC), virtual reality, augmented reality, industrial control, autonomous driving, telemedicine, a smart grid, smart furniture, smart office, smart wearable, smart transportation, smart city, or satellite communication. The terminal may be a mobile phone, a tablet computer, a computer with a wireless transceiver function, a wearable device, a vehicle, an uncrewed aerial vehicle, a helicopter, an airplane, a hot-air balloon, a ship, a robot, a mechanical arm, a smart home device, or the like. A device form of the terminal is not limited in embodiments of this application.

(2) Network device: may be a device in a wireless network. For example, the network device may be a radio access network (radio access network, RAN) node (or device) that connects the terminal device to the wireless network.

In some implementations, the network device may further include a satellite, an airplane, and the like.

In addition, in another possible case, the network device may be another apparatus providing a wireless communication function for the terminal device. A specific technology and a specific device form that are used by the network device are not limited in this application. For ease of description, this is not limited in this application.

Optionally, the network device may further include a core network device. The core network device includes, for example, an access and mobility management function (access and mobility management function, AMF), a user plane function (user plane function, UPF), or a session management function (session management function, SMF).

In this application, an apparatus configured to implement a function of the network device may be a network device, or may be an apparatus that can support the network device in implementing the function, for example, a processor, a circuit, a chip, or a chip system. The apparatus may be installed in the network device or connected to the network device for use. In the technical solutions provided in this application, an example in which the apparatus configured to implement the function of the network device is the network device is used to describe the technical solutions provided in this application.

In this application, an apparatus configured to implement a function of the terminal device may be a terminal device, or may be an apparatus that can support the terminal device in implementing the function, for example, a processor, a circuit, a chip, or a chip system. The apparatus may be installed in the terminal device or connected to the terminal device for use. In the technical solutions provided in this application, an example in which the apparatus configured to implement the function of the terminal device is the terminal device is used to describe the technical solutions provided in this application.

(3) The terms "system" and "network" may be used interchangeably in this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" mentioned in this application are used to distinguish between a plurality of objects, but are not used to limit a sequence, a time sequence, priorities, or importance of the plurality of objects.

This application may be applied to various possible communication systems. For example, this application may be applied to a long term evolution (long term evolution, LTE) system, a new radio (new radio, NR) system, an open access network (open RAN, O-RAN, or ORAN), a cloud radio access network (cloud radio access network, CRAN), or a new radio vehicle-to-everything (NR vehicle-to-everything, NR V2X) system. Alternatively, this application may be applied to a system in hybrid networking of a plurality of access technologies (for example, LTE and 5G). Alternatively, this application may be applied to a device-to-device (device-to-device, D2D) communication system, a machine-to-machine (machine-to-machine, M2M) communication system, internet of things (Internet of Things, IoT), or an uncrewed aerial vehicle communication system. Alternatively, this application may be applied to a non-terrestrial communication system, for example, a satellite communication system or a high-altitude communication platform.

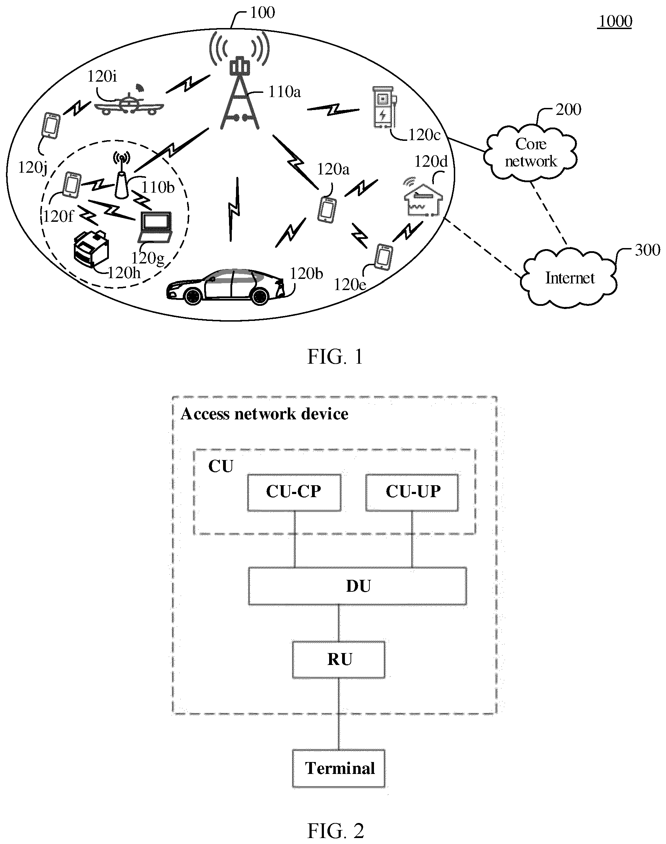

FIG. 1 is a diagram of a possible and non-limiting application scenario according to this application. The solutions provided in this application may be applied to a communication system 1000 shown in FIG. 1. As shown in FIG. 1, the communication system 1000 includes a radio access network (radio access network, RAN) 100 and a core network 200. The RAN 100 may include at least one RAN device (110a and 110b in FIG. 1, collectively referred to as 110). The RAN 100 may further include at least one terminal (120a to 120j in FIG. 1, collectively referred to as 120). The terminals 120a to 120j are connected to the RAN device 110 in a wireless manner. The RAN 100 may further include another RAN device, for example, a wireless relay device and/or a wireless backhaul device (not shown in FIG. 1). The access network device 110 is connected to the core network 200 in a wireless or wired manner. The core network device in the core network and the access network device in the radio access network may be different physical devices, or may be a same physical device that integrates a logical function of the core network and a logical function of the radio access network. This is not limited Terminals may be connected to each other in a wireless manner. Access network devices may be connected to each other in a wired or wireless manner. FIG. 1 is merely a diagram for illustration. The communication system may further include another network device, for example, a wireless relay device and/or a wireless backhaul device (not shown in FIG. 1).

For example, in FIG. 1, the RAN 100 may be configured as a cellular system related to the 3rd generation partnership project (3rd generation partnership project, 3GPP). For example, the RAN 100 may be configured as a 4th generation (4th generation, 4G) mobile communication system, a 5th generation (5th generation, 5G) mobile communication system, or a future-oriented evolved system (for example, a 6G mobile communication system). Alternatively, the RAN 100 may be an open access network (open RAN, O-RAN, or ORAN) or a cloud radio access network (cloud radio access network, CRAN). Alternatively, the RAN 100 may be a communication system that integrates the foregoing two or more systems.

The RAN device 110 may also be sometimes referred to as a RAN node, a RAN entity, an access node, or the like, and forms a part of the communication system, to help a terminal implement radio access. A plurality of RAN nodes 110 in the communication system 1000 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access node in a base station in a future mobile communication system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle-mounted device, or the like. For example, the access network device in a vehicle-to-everything (vehicle-to-everything, V2X) technology may be a road side unit (road side unit, RSU). A plurality of access network devices in the communication system may be base stations of a same type, or may be base stations of different types. The base station may communicate with a terminal, or may communicate with the terminal through a relay station. The terminal may communicate with a plurality of base stations in different access technologies.

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination thereof. The CU (or the CU-CP and the CU-UP), the DU, and the RU can implement different protocol layer functions.

Communication between the access network device and the terminal device may comply with a specific protocol layer structure. The protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

In an implementation example, as shown in FIG. 2, the access network device may include at least one CU and at least one DU. This design may be referred to as CU and DU separation. One CU may be connected to one or more DUs. The CU and the DU may be classified based on a protocol layer of a wireless network. For example, functions of a PDCP layer and a protocol layer (for example, an RRC layer and an SDAP layer) above the PDCP layer are set on the CU, and functions of a protocol layer (for example, an RLC layer, a MAC layer, and a PHY layer) below the PDCP layer are set on the DU. For another example, functions of the protocol layer above the PDCP layer are set on the CU, and functions of the PDCP layer and the protocol layer below the PDCP layer are set on the DU. This is not limited. When the CU includes a CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement functions of the RRC layer and control plane functions of the PDCP layer, and the CU-UP is configured to implement functions of the SDAP layer and user plane functions of the PDCP layer. Names of the CU and the DU are not limited in this application. For example, the CU may be referred to as a first access network element, and the DU may be referred to as a second access network element.

Division into processing functions of the CU and the DU based on the protocol layers is merely an example, or division may be performed in another manner. For example, the CU or the DU may have functions of more protocol layers through division, or the CU or the DU may have some processing functions of the protocol layers through division. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may be performed based on service types or other system requirements. For example, division may be performed based on latencies. Functions whose processing time needs to meet a low latency requirement are set on the DU, and functions whose processing time does not need to meet the latency requirement are set on the CU.

The CU may be connected to a core network. Optionally, the CU may have some functions of the core network.

Further, some functions of the DU may be set separately. As shown in FIG. 2, some functions may be implemented by a radio unit (radio unit, RU). The RU may have a radio frequency function. A name of the RU is not limited in this application. For example, the RU may be referred to as a third access network element. The DU and the RU may be split or separated at a PHY layer. For example, the DU may implement a higher-layer function of the PHY layer, and the RU may implement a lower-layer function of the PHY layer or implement the lower-layer function and a radio frequency function. The higher-layer function of the PHY layer includes a function closer to a MAC layer, and the lower-layer function of the PHY layer includes a function closer to radio frequency. For example, the higher-layer function of the PHY layer includes one or more of the following: forward error correction (forward error correction, FEC) encoding/decoding, scrambling, or modulation/demodulation. The lower-layer function of the PHY layer includes one or more of the following: fast Fourier transform (fast Fourier transform, FFT) transform/inverse fast Fourier transform (inverse fast Fourier transform, IFFT), beamforming, extraction and filtering of a physical random access channel (physical random access channel, PRACH), or the like. The RU may perform radio frequency signal communication with the terminal device via an air interface. A precoding function of the PHY layer may be located in the DU or the RU. A manner of splitting the DU and the RU may be various possible manners. This is not limited.

There is an interface between the DU and the RU. For example, based on different splitting manners, the interface between the DU and the RU may be a common public radio interface (common public radio interface, CPRI) or an enhanced common public radio interface (enhanced common public radio interface, eCPRI).

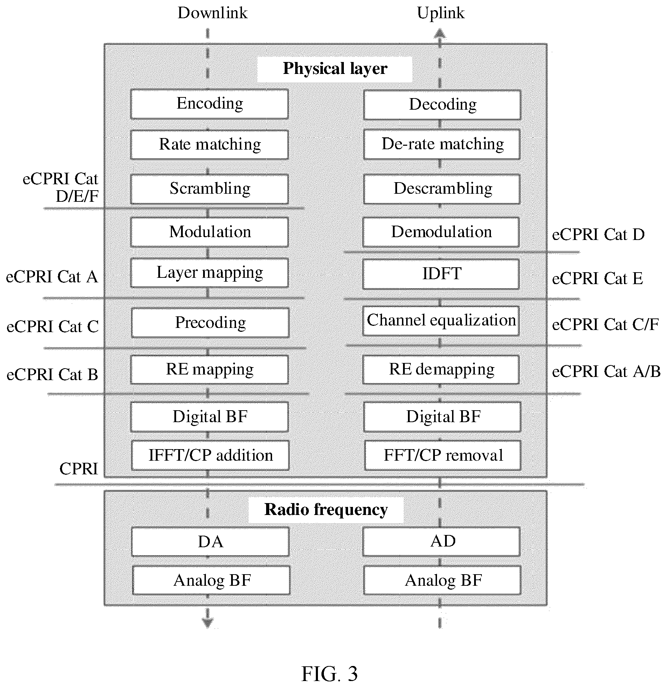

FIG. 3 is a diagram of an architecture of an access network device. The access network device includes one or more functional modules, to implement signal processing. As shown in FIG. 3, a physical layer function is used as an example. The access network device includes one or more of the following functions: encoding, rate matching, scrambling, modulation, layer mapping, precoding, resource element (resource element, RE) mapping, digital beamforming (beamforming, BF), inverse fast Fourier transform (inverse fast Fourier transform, IFFT)/cyclic prefix (cyclic prefix, CP) addition, decoding, de-rate matching, descrambling, demodulation, inverse discrete Fourier transform (inverse discrete Fourier transform, IDFT), channel equalization (or channel estimation), RE demapping, digital BF, fast Fourier transform (fast Fourier transform, FFT)/CP removal, digital-to-analog (digital-to-analog, DA) conversion, analog BF, analog-to-digital (analog-to-digital, AD) conversion, or analog BF.

The one or more functional modules may be implemented by using software, hardware, or a combination of software and hardware. The one or more functional modules may be physically discrete or integrated together. It may be understood that the foregoing functional modules are merely examples. The access network device may include more other modules (for example, a scheduling module, a power control module, a hybrid automatic repeat request (hybrid automatic repeat request, HARQ) module, a flow control module, a mobility management module, or an artificial intelligence (artificial intelligence, AI) module) based on a design, or does not include a functional module shown in FIG. 3 (for example, does not include a digital BF module). The access network device further includes a fronthaul (fronthaul, FH) interface between a DU and an RU, to implement communication between the DU and the RU. The fronthaul interface includes but is not limited to a CPRI or an eCPRI. In a possible implementation, the DU is located in a BBU, the RU is located in an RRU/AAU/RRH, and an interface between the BBU and the RRU/AAU/RRH may also be referred to as a fronthaul interface. To implement the fronthaul interface, the BBU and the RRU/AAU/RRH may be connected through a fronthaul network, or the DU and the RU may be connected through a fronthaul network. For example, the fronthaul network includes but is not limited to a fiber direct connection network and a wavelength division network.

The access network device may support one or more types of fronthaul interfaces, and different fronthaul interfaces correspond to DUs and RUs having different functions. As shown in FIG. 3, if the fronthaul interface between the DU and the RU is a CPRI, the DU is configured to implement one or more of baseband functions, and the RU is configured to implement one or more of radio frequency functions. If the fronthaul interface between the DU and the RU is an eCPRI, some downlink and/or uplink baseband functions are moved from the DU to the RU different from the CPRI. The DU and the RU are split in different manners, and correspond to eCPRIs of different categories (category, Cat for short). FIG. 3 shows six examples of eCPRIs, which are represented by Cat A, B, C, D, E, and F (which may also be represented as Option A to F, Option 1 to 6, or another manner). It may be understood that the DU and the RU may alternatively be split in another manner, that is, there may be another type of eCPRI.

eCPRI Cat A is used as an example. For downlink transmission, layer mapping is used as splitting. The DU is configured to implement layer mapping and one or more functions before layer mapping (that is, one or more of encoding, rate matching, scrambling, modulation, and layer mapping), and another function (for example, one or more of RE mapping, digital BF, or IFFT/CP addition) after layer mapping is moved to the RU for implementation. For uplink transmission, RE demapping is used as splitting. The DU is configured to implement demapping and one or more functions before demapping (that is, one or more of decoding, de-rate matching, descrambling, demodulation, IDFT, channel equalization, and RE demapping), and another function (for example, one or more of digital BF or FFT/CP removal) after demapping is moved to the RU for implementation.

Similarly, eCPRI Cat B, Cat C, Cat D, Cat E, and Cat F correspond to different split manners between the DU and the RU. A split point and a function before the split point are implemented by the DU, and a function after the split point is implemented by the RU. For split points of various categories of eCPRIs, refer to FIG. 3. Details are not described one by one. For example, for eCPRI Cat B, RE mapping is used as splitting of downlink transmission, and RE demapping is used as splitting of uplink transmission. For uplink transmission, RE mapping and a function before RE mapping are implemented by the DU, and a function after RE mapping and a radio frequency function are implemented by the RU. For downlink transmission, RE demapping and a function before RE demapping are implemented by the DU, and a function after RE demapping and a radio frequency function are implemented by the RU.

An eCPRI-based split manner may be symmetric for an uplink and a downlink, for example, eCPRI Cat B and Cat C shown in FIG. 3. Alternatively, an eCPRI-based split manner may be asymmetric for an uplink and a downlink, for example, eCPRI Cat A, Cat D, Cat E, and Cat F shown in FIG. 3. This is not limited. Optionally, for an uplink and/or a downlink, different split manners may be configured for different channels or different channel groups, that is, different categories of eCPRIs are configured. A group of channels may include one or more channels.

In a possible design, the DU is located in the BBU, the RU is located in the RRU/AAU/RRH, a processing module configured to implement a baseband function in the BBU is referred to as a baseband high (baseband high, BBH) layer unit, and a processing module configured to implement a baseband function in the RRU/AAU/RRH is referred to as a baseband low (baseband low, BBL) layer unit.

In a wireless communication scenario, a network device may be deployed in a distributed manner. For example, function entities configured to process signals in the network device are split, some of the function entities are carried on a device, and the other function entities are carried on another device, to improve a coverage capability and deployment flexibility of the network device.

For example, the network device is a base station, and the base station includes a BBU and an RRU. In a current application in the industry, a split point of a base station function is usually selected before a base station service starts (for example, the split point may be eCPRI Cat B, Cat C, Cat D, Cat E, or Cat F described in FIG. 3). In addition, after the service starts, the base station uses a same and fixed split point for all terminal devices connected to the base station, that is, the base station no longer modify the split point. For data of any terminal device connected to the base station, the BBU performs data processing processes of some base station functions, and the RRU performs data processing processes of other base station functions. Similarly, when data of a plurality of terminal devices is transmitted between the BBU and the RRU, a same data packet processing manner is also used for the data of the terminal devices (for example, a quantity of packets assembled for the data of the terminal device and transmission time of the data of the terminal device).

In the foregoing implementation process, data transmission management on a control plane between the BBU and the RRU is simplified. However, on a link between the BBU and the RRU, when data of different terminal devices is processed in a same manner, actual corresponding transmission efficiency may be different. Consequently, transmission bandwidth may not be fully used.

In conclusion, how to implement efficient data transmission between different functional entities in the network device is an urgent technical problem to be resolved.

To resolve the foregoing problem, this application provides a communication method and a related device, to process data of a terminal device on a link between a baseband unit and a radio frequency unit at a granularity of the terminal device, so as to ensure service experience of the terminal device. The following provides detailed descriptions with reference to more accompanying drawings.

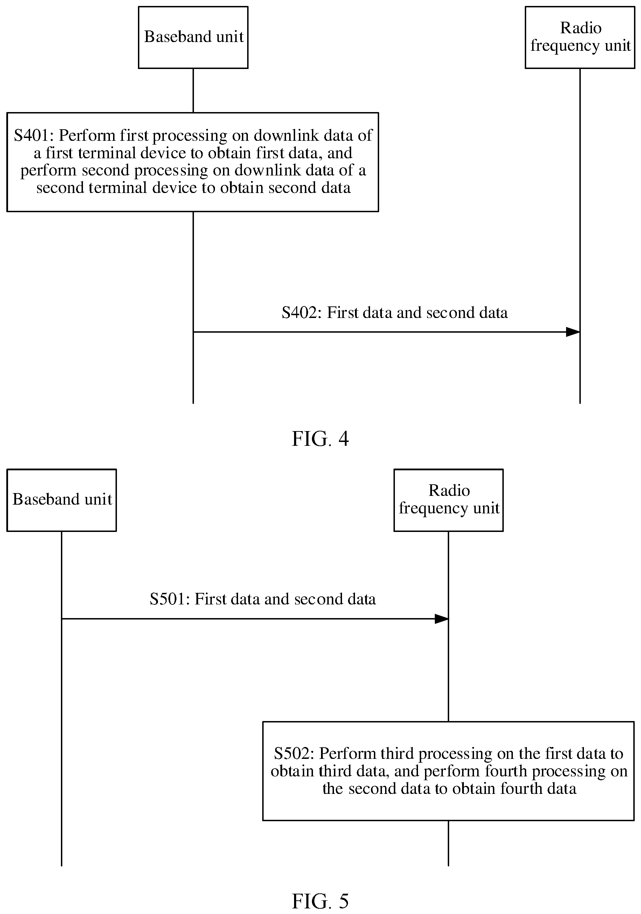

FIG. 4 is a diagram of a communication method according to this application. The method includes the following steps.

S401: A baseband unit performs first processing on downlink data of a first terminal device to obtain first data, and the baseband unit performs second processing on downlink data of a second terminal device to obtain second data, where the first processing is different from the second processing.

S402: The baseband unit sends the first data and the second data to a radio frequency unit. Correspondingly, the radio frequency unit receives the first data and the second data from the baseband unit.

Optionally, on a link between the baseband unit and the radio frequency unit, the first data and the second data may be carried in a same message, or may be carried in different messages. This is not limited herein.

It should be understood that in this application, the radio frequency unit is a network device having a radio frequency signal processing function, the baseband unit is a network device having a baseband signal processing function, and the radio frequency unit and the baseband unit may have other names.

For example, the radio frequency unit is radio equipment (radio equipment, RE) and the baseband unit is a radio equipment controller (radio equipment controller, REC).

For another example, the radio frequency unit is a remote radio unit (remote radio unit, RRU) and the baseband unit is a building baseband unit (building baseband unit, BBU).

For another example, the radio frequency unit is an active antenna unit (active antenna unit, AAU) and the baseband unit is a BBU.

For another example, the radio frequency unit is a radio unit (radio unit, RU) and the baseband unit is a distributed unit (distributed unit, DU).

Optionally, the link between the baseband unit and the radio frequency unit may be referred to as a fronthaul link, a fronthaul network, or the like.

Optionally, a communication interface between the baseband unit and the radio frequency unit may be referred to as a common public radio interface (common public radio interface, CPRI), an enhanced common public radio interface (enhanced common public radio interface, eCPRI), a fronthaul interface in an open radio access network (open radio access network, ORAN or O-RAN), or another interface name. This is not limited herein.

It should be understood that, in this application, the downlink data may be understood as data sent by a network device (the network device includes a radio frequency unit and/or a radio frequency unit) to the terminal device, and uplink data mentioned below may be understood as data sent by the terminal device to the network device.

It should be understood that a quantity of terminal devices corresponding to the first terminal device (or the second terminal device) is not limited in this application. For example, the quantity of terminal devices corresponding to the first terminal device (or the second terminal device) may be 1, or may be greater than 1. When the quantity of terminal devices corresponding to the first terminal device (or the second terminal device) is greater than 1, the first terminal device and the second terminal device may also be understood as different types of terminal devices.

Optionally, the first terminal device and the second terminal device are different terminal devices. For example, the first terminal device and the second terminal device are terminal devices with different code rates, and the first terminal device and the second terminal device are terminal devices with different channel state information.

In a possible implementation, in step S401, the first processing and the second processing that are separately performed by the baseband unit include physical layer processing; and/or the first processing and the second processing include data packet processing. Specifically, on the link between the baseband unit and the radio frequency unit, processing performed by the baseband unit on downlink data of a terminal device includes physical layer processing and/or data packet processing. In other words, the baseband unit performs different physical layer processing and/or different data packet processing on data of different terminal devices, to provide a plurality of flexible implementations.

The following describes an example of an implementation process in which the first processing and the second processing include physical layer processing.

In a possible implementation, when the first processing and the second processing include physical layer processing, the physical layer processing includes at least one of the following: encoding, rate matching, scrambling, modulation, layer mapping, precoding, resource element (resource element, RE) mapping, digital beam mapping (beamforming, BF), inverse fast Fourier transform (invert fast Fourier transform, IFFT), cyclic prefix (cyclic prefix, CP) addition, digital-to-analog conversion, or analog BF.

Specifically, in a downlink data processing process in FIG. 4, the downlink data sent by the baseband unit to the radio frequency unit in step S402 is data obtained after the physical layer processing. Physical layer processing performed by the baseband unit on the data of the first terminal device is different from physical layer processing performed by the baseband unit on the data of the second terminal device, so that different physical layer processing processes are more flexibly configured in the baseband unit and the radio frequency unit. In other words, in the downlink data processing process, the baseband unit (and/or the radio frequency unit) may perform different physical layer processing processes for data of different terminal devices. Therefore, compared with a same physical layer processing process used for the data of the different terminal devices, in the foregoing technical solution, differentiated configuration can be implemented on a physical layer processing process at a granularity of a terminal device, to improve data transmission efficiency of a part of terminal devices, thereby improving user experience.

It may be understood that, when some physical layer processing is performed on data of the terminal device that is sent by the baseband unit to the radio frequency unit, after the radio frequency unit receives the data of the terminal device from the baseband unit, the radio frequency unit may perform other physical layer processing on the data of the terminal device.

For example, a transmission interface between the baseband unit and the radio frequency unit is eCPRI Cat D/E/F. Processing (that is, the first processing or the second processing mentioned above) such as encoding, rate matching, and scrambling is performed on the data of the terminal device that is sent by the baseband unit to the radio frequency unit. After the radio frequency unit receives the data of the terminal device from the baseband unit, the radio frequency unit may perform processing (that is, the third processing or the fourth processing mentioned above) such as modulation, layer mapping, precoding, RE mapping, digital BF, IFFT, CP addition, digital-to-analog conversion, and analog BF on the data of the terminal device.

For another example, a transmission interface between the baseband unit and the radio frequency unit is a CPRI. Processing (that is, the first processing or the second processing mentioned above) such as encoding, rate matching, scrambling, modulation, layer mapping, precoding, RE mapping, digital BF, IFFT, and CP addition is performed on the data of the terminal device that is sent by the baseband unit to the radio frequency unit. After the radio frequency unit receives the data of the terminal device from the baseband unit, the radio frequency unit may perform processing (that is, the third processing or the fourth processing mentioned above) such as digital-to-analog conversion and analog BF on the data of the terminal device.

It should be noted that, in this application, any one or more pieces of physical layer processing (that is, the first processing or the second processing mentioned above) may be performed on the data of the terminal device that is sent by the baseband unit to the radio frequency unit, including but not limited to physical layer processing of the baseband unit corresponding to a current eCPRI Cat A/B/C/D/E/F interface and physical layer processing of the baseband unit corresponding to a current CPRI, and may further include another implementation.

For example, the data of the terminal device that is sent by the baseband unit to the radio frequency unit may be encoded, so that the radio frequency unit subsequently performs other physical layer processing.

For another example, encoding and rate matching may be performed on the data of the terminal device that is sent by the baseband unit to the radio frequency unit, so that the radio frequency unit subsequently performs other physical layer processing.

The following describes an example of an implementation process in which the first processing and the second data include data packet processing.

In a possible implementation, when the first processing and the second processing include data packet processing, a quantity of data packets corresponding to the first data is different from a quantity of data packets corresponding to the second data; and/or a time domain resource carrying a data packet corresponding to the first data is different from a time domain resource carrying a data packet corresponding to the second data.

Specifically, when the first processing and the second processing include data packet processing, the quantity of data packets corresponding to the first data is different from the quantity of data packets corresponding to the second data, so that data packets corresponding to data of different terminal devices are processed in different packet assembly manners, thereby smoothly processing a data stream transmitted on the link between the baseband unit and the radio frequency unit. In addition, when the first processing and the second processing include data packet processing, the time domain resource carrying the data packet corresponding to the first data is different from the time domain resource carrying the data packet corresponding to the second data, so that data of different terminal devices can be transmitted in a staggered manner (for example, when data of a terminal device is transmitted, physical layer processing/packet assembly processing is performed on data of another terminal device), thereby avoiding an excessively large amount of data streams at a same moment on the link between the baseband unit and the radio frequency unit. Therefore, when the first processing and the second processing include data packet processing, transmission bandwidth can be time-division multiplexed by the data of the different terminal devices, to improve transmission bandwidth utilization on the link between the baseband unit and the radio frequency unit.

In a possible implementation, the first processing is determined based on at least one of the following: a transmission code rate of the downlink data of the first terminal device, a type of the first terminal device, or channel state information of the first terminal device; and/or the second processing is determined based on at least one of the following: a transmission code rate of the downlink data of the second terminal device, a type of the second terminal device, or channel state information of the second terminal device. Specifically, on the link between the baseband unit and the radio frequency unit, processing performed by the baseband unit on downlink data of a terminal device may be determined based on related information of the terminal device. A plurality of implementations of determining the processing process are provided, to improve flexibility of implementing the solution.

In a possible implementation, in the method shown in FIG. 4, the method further includes: The baseband unit sends first indication information and second indication information, where the first indication information indicates that the first data is obtained by performing the first processing based on the downlink data of the first terminal device, and the second indication information indicates that the second data is obtained by performing the second processing based on the downlink data of the second terminal device. Specifically, in a downlink data processing process, the baseband unit may send the first indication information and the second indication information to the radio frequency unit, so that the radio frequency unit can determine a manner of processing the first data and the second data based on the first indication information and the second indication information, to send downlink data to a terminal device after further processing the received first data and second data.

Optionally, the first indication information and the first data in step S402 may be carried in a same message, or may be carried in different messages. This is not limited herein. Similarly, the second indication information and the second data in step S402 may be carried in a same message, or may be carried in different messages. This is not limited herein.

Optionally, the first indication information and the second indication information may also be obtained in another manner. For example, the first indication information and the second indication information may be information preconfigured in the baseband unit and the radio frequency unit, or the first indication information and the second indication information may be information sent by a remote device (for example, an operation management center (Operation Management Center, OMC) or a base station control unit) to the baseband unit and/or the radio frequency unit, or another implementation. This is not limited herein.

According to the technical solution shown in FIG. 4, after performing the first processing on the downlink data of the first terminal device to obtain the first data, the baseband unit sends the first data on the link between the baseband unit and a radio frequency unit; and after performing the second processing on the downlink data of the second terminal device to obtain the second data, the baseband unit sends the second data on the link, where the first processing is different from the second processing. In other words, after performing different processing on downlink data of different terminal devices, the baseband unit sends, to the radio frequency unit, downlink data of the different terminal devices that is obtained through the different processing. Therefore, data of a terminal device can be processed on the link between the baseband unit and the radio frequency unit at a granularity of the terminal device, to ensure service experience of the terminal device.

FIG. 5 is a diagram of a communication method according to this application. The method includes the following steps.

S501: A baseband unit sends first data and second data. Correspondingly, a radio frequency unit receives the first data and the second data from the baseband unit.

It should be noted that, for a process of determining/generating the first data and the second data by the baseband unit, refer to the implementation process of step S401 shown in FIG. 4, and implement a corresponding technical effect. Details are not described herein again.

S502: The radio frequency unit performs third processing on the first data to obtain third data, and the radio frequency unit performs fourth processing on the second data to obtain fourth data, where the third processing is different from the fourth processing.

It may be understood that the first data and the second data are downlink data. Therefore, after the radio frequency unit obtains the third data and the fourth data respectively based on the first data and the second data in S502, the radio frequency unit may send corresponding downlink data to the terminal device through an operation such as air interface mapping.

In a possible implementation, the third processing and the fourth processing include physical layer processing; and/or the third processing and the fourth processing include data packet processing. Specifically, on a link between the baseband unit and the radio frequency unit, processing performed by the baseband unit on downlink data of a terminal device includes physical layer processing and/or data packet processing. In other words, after the radio frequency unit receives data of different terminal devices, the radio frequency unit performs different physical layer processing and/or different data packet processing on the data of the different terminal devices, to provide a plurality of flexible implementations.

In a possible implementation, when the third processing and the fourth processing include data packet processing, a quantity of data packets corresponding to the first data is different from a quantity of data packets corresponding to the second data; and/or a time domain resource carrying a data packet corresponding to the first data is different from a time domain resource carrying a data packet corresponding to the second data. Specifically, when the third processing and the fourth processing include data packet processing, the quantity of data packets corresponding to the first data is different from the quantity of data packets corresponding to the second data, so that data packets corresponding to data of different terminal devices are processed in different packet assembly manners, thereby smoothly processing a data stream transmitted on the link between the baseband unit and the radio frequency unit. In addition, when the third processing and the fourth processing include data packet processing, the time domain resource carrying the data packet corresponding to the first data is different from the time domain resource carrying the data packet corresponding to the second data, so that data of different terminal devices can be transmitted in a staggered manner (for example, when data of a terminal device is transmitted, physical layer processing/packet assembly processing is performed on data of another terminal device), thereby avoiding an excessively large amount of data streams at a same moment on the link between the baseband unit and the radio frequency unit. Therefore, when the third processing and the fourth processing include data packet processing, transmission bandwidth can be time-division multiplexed by the data of the different terminal devices, to improve transmission bandwidth utilization on the link between the baseband unit and the radio frequency unit.

It may be understood that, when a quantity of data packets corresponding to a piece of data (for example, the first data or the second data) received by the radio frequency unit is 1, the radio frequency unit may obtain the data based on the one data packet. When a quantity of data packets corresponding to a piece of data (for example, the first data or the second data) received by the radio frequency unit is N (N is an integer greater than 1), after the radio frequency unit receives the N data packets, the radio frequency unit performs a packet assembly (or concatenation) process on the N packets to obtain the data.

It should be noted that, for implementation processes of physical layer processing and data packet processing, refer to the descriptions of the method shown in FIG. 4, and implement corresponding technical effects. Details are not described herein again.

In a possible implementation, in step S502, the third processing is determined based on at least one of the following: a transmission code rate of downlink data of the first terminal device, a type of the first terminal device, or channel state information of the first terminal device; and/or the fourth processing is determined based on at least one of the following: a transmission code rate of downlink data of the second terminal device, a type of the second terminal device, or channel state information of the second terminal device. Specifically, on the link between the baseband unit and the radio frequency unit, processing performed by the baseband unit on downlink data of a terminal device may be determined based on related information of the terminal device. A plurality of implementations of determining the processing process are provided, to improve flexibility of implementing the solution.

In a possible implementation, in the implementation method shown in FIG. 5, the method further includes: The radio frequency unit receives first indication information and second indication information, where the first indication information indicates that the first data is obtained by performing the first processing based on the downlink data of the first terminal device, and the second indication information indicates that the second data is obtained by performing the second processing based on the downlink data of the second terminal device. Specifically, in a downlink data processing process, the radio frequency unit may receive the first indication information and the second indication information from the baseband unit, so that the radio frequency unit can determine a manner of processing the first data and the second data based on the first indication information and the second indication information, to send downlink data to a terminal device after further processing the received first data and second data.

It should be noted that, for implementation processes of the first processing and the second processing, refer to descriptions of the method shown in FIG. 4, and implement corresponding technical effects. Details are not described herein again.

According to the technical solution in FIG. 5, after the radio frequency unit receives the first data of the first terminal device and the second data of the second terminal device on the link between the baseband unit and the radio frequency unit, the radio frequency unit performs different processing processes on the first data and the second data, to obtain the third data and the fourth data. Therefore, data of a terminal device can be processed on the link between the baseband unit and the radio frequency unit at a granularity of the terminal device, to ensure service experience of the terminal device.

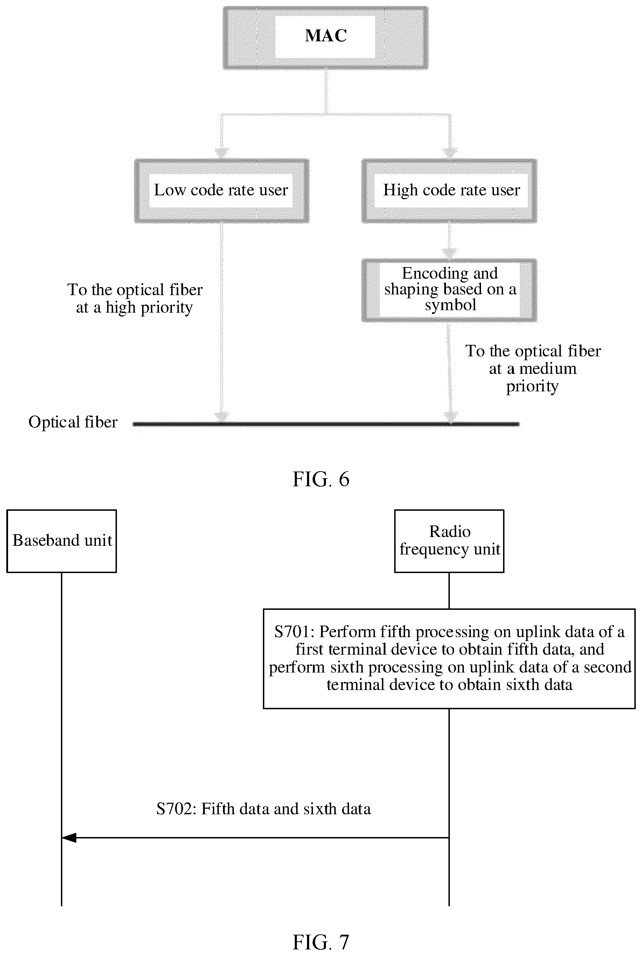

It can be learned from the foregoing implementation processes shown in FIG. 4 and FIG. 5 that, in a downlink data processing process, the baseband unit and the radio frequency unit can perform different processing processes for data of different terminal devices. For ease of understanding, the following provides an implementation example shown in FIG. 6 for description. In FIG. 6, descriptions are provided by using an example in which the first terminal device is a terminal device for high code rate transmission (denoted as a high code rate user in the figure) and the second terminal device is a terminal device for low code rate transmission (denoted as a low code rate user in the figure).

For a downlink service, after the baseband unit determines that a processing manner (including physical layer processing and/or data packet processing) of the downlink data of the first terminal device is the first processing, and determines that a processing manner (including physical layer processing and/or data packet processing) of the downlink data of the second terminal device is the second processing, the baseband unit obtains the first data and the second data respectively based on the first processing and the second processing, and sends the first data, the second data, the first indication information, and the second indication information to the radio frequency unit.

In the example shown in FIG. 6, for data of the high code rate user (that is, the downlink data of the first terminal device), the baseband unit encodes the data, and transmits encoded data to the radio frequency unit on an optical fiber, that is, the first processing includes encoding. In addition, for data of the low code rate user (that is, the downlink data of the second terminal device), the baseband unit does not need to encode the data, but transmits the unencoded data to the radio frequency unit on the optical fiber, that is, the second processing does not include encoding.

Based on this implementation process, on a link between the baseband unit and the radio frequency unit, the transmitted data of the high code rate user is the encoded data, and an encoding operation is performed on a baseband unit side, to improve transmission quality of the data of the high code rate user. In addition, on the link, the transmitted data of the low code rate user is the encoded data, and an encoding operation is performed on a radio frequency unit side, to reduce an amount of to-be-transmitted data, thereby increasing a transmission speed of the data of the low code rate user, and reducing a delay.

In the example shown in FIG. 6, for the data of the high code rate user, transmission shaping is performed on the data of the high code rate user and the data of the low code rate user (that is, time domain resources for transmitting the two pieces of data are staggered as much as possible), so that the data of the low code rate user is transmitted while the data of the high code rate user is encoded. When the data of the low code rate user is encoded by the radio frequency unit, the data of the high code rate user is transmitted on the link. In this way, transmission bandwidth is time-division multiplexed by different users, to improve transmission bandwidth utilization.

Optionally, the shaping manner may be selected in a plurality of manners, for example, a symbol granularity data form corresponding to a radio air interface technology, or may be a complete data packet form at a single scheduling granularity, or may be a form in which a plurality of data packets that can be independently encoded are shaped and separately sent, or may be implemented in another manner. This is not limited herein.

Optionally, a shaping granularity may be selected through multi-user packetization and transmission together, or user packetization and transmission, or another manner. This is not limited herein.

Optionally, for determining the high code rate user and the low code rate user, flexible selection may be performed based on a bandwidth status of an actual network and encoding capabilities of the baseband unit and the radio frequency unit; or setting may be performed in a parameter configuration manner, and selection may be performed based on a specified value, or another manner is used. This is not limited herein.

In addition, for the radio frequency unit, after the radio frequency unit receives the first data, the second data, the first indication information, and the second indication information on the link between the baseband unit and the radio frequency unit, the radio frequency unit may perform further processing (for example, the third processing and the fourth processing described above) on the received first data and second data. For example, for the encoded data (for example, the first data), the radio frequency unit performs operations such as air interface mapping. For another example, for the unencoded data (for example, the second data), the radio frequency unit performs operations such as encoding and air interface mapping.

FIG. 7 is a diagram of a communication method according to this application. The method includes the following steps.

S701: A radio frequency unit performs fifth processing on uplink data of a first terminal device to obtain fifth data, and the radio frequency unit performs sixth processing on uplink data of a second terminal device to obtain sixth data, where the fifth processing is different from the sixth processing.

S702: The radio frequency unit sends the fifth data and the sixth data to a baseband unit. Correspondingly, the baseband unit receives the fifth data and the sixth data from the baseband unit.

Optionally, on a link between the baseband unit and the radio frequency unit, the fifth data and the sixth data may be carried in a same message, or may be carried in different messages. This is not limited herein.

In a possible implementation, in the method shown in FIG. 7, the method further includes: The radio frequency unit sends first indication information and second indication information, where the first indication information indicates that the fifth data is obtained by performing the fifth processing based on the uplink data of the first terminal device, and the second indication information indicates that the sixth data is obtained by performing the sixth processing based on the uplink data of the second terminal device; or the radio frequency unit receives the first indication information and the second indication information. Specifically, in an uplink data processing process, both the radio frequency unit and the baseband unit may determine a manner of processing uplink data on the link between the radio frequency unit and the baseband unit. In addition, based on transmission of the first indication information and the second indication information, the radio frequency unit and the baseband unit can determine a manner of processing the uplink data on the link, so that the radio frequency unit and the baseband unit can reach a consensus understanding on processing of the uplink data, to avoid a communication error.

Optionally, the first indication information and the first data may be carried in a same message, or may be carried in different messages. This is not limited herein. Similarly, the second indication information and the second data may be carried in a same message, or may be carried in different messages. This is not limited herein.

Optionally, the first indication information and the second indication information may also be obtained in another manner. For example, the first indication information and the second indication information may be information sent by a remote device (for example, an operation management center (Operation Management Center, OMC) or a base station control unit) to the baseband unit and/or the radio frequency unit, or another implementation. This is not limited herein.

In a possible implementation, the fifth processing and the sixth processing include physical layer processing; and/or the fifth processing and the sixth processing include data packet processing. Specifically, on the link between the baseband unit and the radio frequency unit, processing performed by the baseband unit on uplink data of a terminal device includes physical layer processing and/or data packet processing. In other words, the radio frequency unit performs different physical layer processing and/or different data packet processing on data of different terminal devices, to provide a plurality of flexible implementations.

In a possible implementation, when the fifth processing and the sixth processing include physical layer processing, the physical layer processing includes at least one of the following: decoding, de-rate matching, descrambling, demodulation, inverse discrete Fourier transform (inverse discrete Fourier transform, IDFT), channel equalization, RE demapping, digital BF, fast Fourier transform (fast Fourier transform, FFT), CP removal, analog-to-digital conversion, or analog BF. Specifically, in an uplink data processing process, uplink data sent by the radio frequency unit to the baseband unit is data obtained after the physical layer processing. Physical layer processing performed by the radio frequency unit on the data of the first terminal device is different from physical layer processing performed by the radio frequency unit on the data of the second terminal device, so that different physical layer processing processes are more flexibly configured in the baseband unit and the radio frequency unit. In other words, in the uplink data processing process, the baseband unit (and/or the radio frequency unit) may perform different physical layer processing processes for data of different terminal devices. Therefore, compared with a same physical layer processing process used for the data of the different terminal devices, in the foregoing technical solution, differentiated configuration can be implemented on a physical layer processing process at a granularity of a terminal device, to improve data transmission efficiency of a part of terminal devices, thereby improving user experience.

It may be understood that, when some physical layer processing is performed on data of the terminal device that is sent by the radio frequency unit to the baseband unit, after the baseband unit receives the data of the terminal device from the radio frequency unit, the baseband unit may perform other physical layer processing on the data of the terminal device.

For example, a transmission interface between the baseband unit and the radio frequency unit is eCPRI category (category, Cat) D. Processing (that is, the fifth processing or the sixth processing mentioned above) such as analog BF, analog-to-digital conversion, CP removal, FFT, digital BF, RE demapping, channel equalization, and IDFT is performed on the data of the terminal device that is sent by the radio frequency unit to the baseband unit. After the baseband unit receives the data of the terminal device from the radio frequency unit, the baseband unit may perform processing (that is, the seventh processing or the eighth processing mentioned above) such as demodulation, descrambling, de-rate matching, and decoding on the data of the terminal device.

For another example, a transmission interface between the baseband unit and the radio frequency unit is a CPRI. Processing (that is, the fifth processing or the sixth processing mentioned above) such as analog BF and analog-to-digital conversion is performed on the data of the terminal device that is sent by the radio frequency unit to the baseband unit. After the baseband unit receives the data of the terminal device from the radio frequency unit, the baseband unit may perform processing (that is, the seventh processing or the eighth processing mentioned above) such as CP removal, FFT, digital BF, RE demapping, channel equalization, and IDFT on the data of the terminal device.

It should be noted that, in this application, any one or more pieces of physical layer processing (that is, the fifth processing or the sixth processing mentioned above) may be performed on the data of the terminal device that is sent by the radio frequency unit to the baseband unit, including but not limited to physical layer processing of the baseband unit corresponding to a current eCPRI Cat A/B/C/D/E/F interface and physical layer processing of the radio frequency unit corresponding to a current CPRI, and may further include another implementation.

For example, analog BF may be performed on the data of the terminal device that is sent by the radio frequency unit to the baseband unit, so that the radio frequency unit subsequently performs other physical layer processing.

For another example, analog BF, analog-to-digital conversion, and FFT/CP removal may be performed on the data of the terminal device that is sent by the radio frequency unit to the baseband unit, so that the radio frequency unit subsequently performs other physical layer processing.

In a possible implementation, when the fifth processing and the sixth processing include data packet processing, a quantity of data packets corresponding to the fifth data is different from a quantity of data packets corresponding to the sixth data; and/or a time domain resource carrying a data packet corresponding to the fifth data is different from a time domain resource carrying a data packet corresponding to the sixth data. Specifically, when the fifth processing and the sixth processing include data packet processing, a quantity of data packets corresponding to the fifth data is different from a quantity of data packets corresponding to the sixth data, so that data packets corresponding to data of different terminal devices are processed in different packet assembly manners, thereby smoothly processing a data stream transmitted on the link between the baseband unit and the radio frequency unit. In addition, when the fifth processing and the sixth processing include data packet processing, the time domain resource carrying the data packet corresponding to the fifth data is different from the time domain resource carrying the data packet corresponding to the sixth data, so that data of different terminal devices can be transmitted in a staggered manner (for example, when data of a terminal device is transmitted, physical layer processing/packet assembly processing is performed on data of another terminal device), thereby avoiding an excessively large amount of data streams at a same moment on the link between the baseband unit and the radio frequency unit. Therefore, when the fifth processing and the sixth processing include data packet processing, transmission bandwidth can be time-division multiplexed by the data of the different terminal devices, to improve transmission bandwidth utilization on the link between the baseband unit and the radio frequency unit.

It should be noted that, for implementation processes of physical layer processing and data packet processing, refer to the descriptions of the method shown in FIG. 4, and implement corresponding technical effects. Details are not described herein again.

In a possible implementation, the fifth processing is determined based on at least one of the following: a transmission code rate of the uplink data of the first terminal device, a type of the first terminal device, or channel state information of the first terminal device; and/or the sixth processing is determined based on at least one of the following: a transmission code rate of the uplink data of the second terminal device, a type of the second terminal device, or channel state information of the second terminal device. Specifically, on the link between the baseband unit and the radio frequency unit, processing performed by the baseband unit on uplink data of a terminal device may be determined based on related information of the terminal device. A plurality of implementations of determining the processing process are provided, to improve flexibility of implementing the solution.

According to the technical solution shown in FIG. 7, after performing the fifth processing on the uplink data of the first terminal device to obtain the fifth data, the radio frequency unit sends the fifth data on the link between the baseband unit and the radio frequency unit; and after performing the sixth processing on the uplink data of the second terminal device to obtain the sixth data, the radio frequency unit sends the sixth data on the link, where the fifth processing is different from the sixth processing. In other words, after performing different processing on uplink data of different terminal devices, the radio frequency unit sends, to the baseband unit, uplink data of the different terminal devices that is obtained through the different processing. Therefore, data of a terminal device can be processed on the link between the baseband unit and the radio frequency unit at a granularity of the terminal device, to ensure service experience of the terminal device.

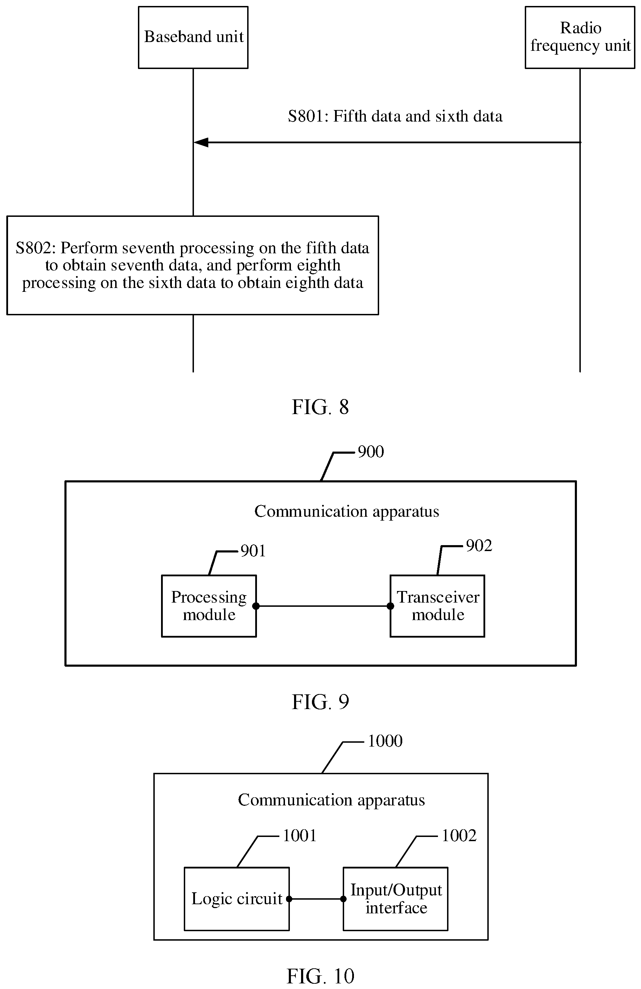

FIG. 8 is a diagram of a communication method according to this application. The method includes the following steps.

S801: A radio frequency unit sends fifth data and sixth data. Correspondingly, a baseband unit receives the fifth data and the sixth data from the baseband unit.

Optionally, on a link between the baseband unit and the radio frequency unit, the fifth data and the sixth data may be carried in a same message, or may be carried in different messages. This is not limited herein.

S802: The baseband unit performs seventh processing on the fifth data to obtain seventh data, and the baseband unit performs eighth processing on the sixth data to obtain eighth data, where the seventh processing is different from the eighth processing.

It may be understood that the fifth data and the sixth data are uplink data. Therefore, after the baseband unit obtains the seventh data and the eighth data respectively based on the fifth data and the sixth data in step S802, the baseband unit may locally process the uplink data (or the baseband unit sends the uplink data to another device, for example, an access network device, a core network device, or another terminal device).

In a possible implementation, the seventh processing and the eighth processing include physical layer processing; and/or the seventh processing and the eighth processing include data packet processing. Specifically, on the link between the baseband unit and the radio frequency unit, processing performed by the radio frequency unit on uplink data of a terminal device includes physical layer processing and/or data packet processing. In other words, after the baseband unit receives data of different terminal devices, the baseband unit performs different physical layer processing and/or different data packet processing on the data of the different terminal devices, to provide a plurality of flexible implementations.

In a possible implementation, when the seventh processing and the eighth processing include data packet processing, a quantity of data packets corresponding to the fifth data is different from a quantity of data packets corresponding to the sixth data; and/or a time domain resource carrying a data packet corresponding to the fifth data is different from a time domain resource carrying a data packet corresponding to the sixth data. Specifically, when the seventh processing and the eighth processing include data packet processing, the quantity of data packets corresponding to the first data is different from the quantity of data packets corresponding to the second data, so that data packets corresponding to data of different terminal devices are processed in different packet assembly manners, thereby smoothly processing a data stream transmitted on the link between the baseband unit and the radio frequency unit. In addition, when the seventh processing and the eighth processing include data packet processing, the time domain resource carrying the data packet corresponding to the first data is different from the time domain resource carrying the data packet corresponding to the second data, so that data of different terminal devices can be transmitted in a staggered manner (for example, when data of a terminal device is transmitted, physical layer processing/packet assembly processing is performed on data of another terminal device), thereby avoiding an excessively large amount of data streams at a same moment on the link between the baseband unit and the radio frequency unit. Therefore, when the seventh processing and the eighth processing include data packet processing, transmission bandwidth can be time-division multiplexed by the data of the different terminal devices, to improve transmission bandwidth utilization on the link between the baseband unit and the radio frequency unit.

It may be understood that, when a quantity of data packets corresponding to a piece of data (for example, the fifth data or the sixth data) received by the baseband unit is 1, the baseband unit may obtain the data based on the data packet. When a quantity of data packets corresponding to a piece of data (for example, the fifth data or the sixth data) received by the baseband unit is N (N is an integer greater than 1), after the baseband unit receives the N data packets, the baseband unit performs a packet assembly (or concatenation) process on the N data packets to obtain the data.

It should be noted that, for implementation processes of physical layer processing and data packet processing, refer to the descriptions of the method shown in FIG. 4, and implement corresponding technical effects. Details are not described herein again.

In a possible implementation, the seventh processing is determined based on at least one of the following: a transmission code rate of uplink data of the first terminal device, a type of the first terminal device, or channel state information of the first terminal device; and/or the eighth processing is determined based on at least one of the following: a transmission code rate of uplink data of the second terminal device, a type of the second terminal device, or channel state information of the second terminal device. Specifically, on the link between the baseband unit and the radio frequency unit, processing performed by the baseband unit on downlink data of a terminal device may be determined based on related information of the terminal device. A plurality of implementations of determining the processing process are provided, to improve flexibility of implementing the solution.

In a possible implementation, in the method shown in FIG. 8, the method further includes: The baseband unit sends first indication information and second indication information to the radio frequency unit (that is, the radio frequency unit receives the first indication information and the second indication information from the baseband unit), where the first indication information indicates that the fifth data is obtained by performing the fifth processing based on the uplink data of the first terminal device, and the second indication information indicates that the sixth data is obtained by performing the sixth processing based on the uplink data of the second terminal device; or the radio frequency unit sends the first indication information and the second indication information to the baseband unit (that is, the baseband unit receives the first indication information and the second indication information from the radio frequency unit). Specifically, in an uplink data processing process, both the radio frequency unit and the baseband unit may determine a manner of processing uplink data on the link between the radio frequency unit and the baseband unit. In addition, based on transmission of the first indication information and the second indication information, the radio frequency unit and the baseband unit can determine a manner of processing the uplink data on the link, so that the radio frequency unit and the baseband unit can reach a consensus understanding on processing of the uplink data, to avoid a communication error.

According to the technical solution shown in FIG. 8, after the baseband unit receives the fifth data of the first terminal device and the sixth data of the second terminal device on the link between the baseband unit and the radio frequency unit, the baseband unit performs different processing processes on the fifth data and the sixth data, to obtain the seventh data and the eighth data. Therefore, data of a terminal device can be processed on the link between the baseband unit and the radio frequency unit at a granularity of the terminal device, to ensure service experience of the terminal device.

It can be learned from the foregoing implementation processes shown in FIG. 7 and FIG. 8 that, in an uplink data processing process, the baseband unit and the radio frequency unit can perform different processing processes for data of different terminal devices. For ease of understanding, the following provides an implementation example of uplink data for description.

Generally, for an uplink service, a bandwidth requirement of uplink service data is usually lower than a bandwidth requirement of downlink service data, but a performance requirement is high. A corresponding processing manner may be determined based on channel state information of a terminal device. For example, the channel state information of the terminal device may be determined based on a measurement result of a downlink reference signal fed back by the terminal device (or based on a measurement result of an uplink reference signal sent by the terminal device or the like), to evaluate a radio environment characteristic of the terminal device, and the terminal device is classified into an interference-limited user, a power-limited user, a performance-unlimited user, and the like.

For example, a transmission interface between the baseband unit and the radio frequency unit is an eCPRI. If the first terminal device is an interference-limited user, a Cat E split point is selected as a data processing demarcation point (that is, the baseband unit performs processing such as decoding, de-rate matching, ..., and IDFT, and the radio frequency unit performs processing such as channel equalization, RE demapping, ..., and analog BF), to validate a multi-cell coordination feature. For a power-limited user, a Cat D split point is selected as a data processing demarcation point (that is, the baseband unit performs processing such as decoding, de-rate matching, and demodulation, and the radio frequency unit performs processing such as IDFT, channel equalization, RE demapping, ..., and analog BF), to validate a multi-beam feature. For a performance-unlimited user, a Cat D split point is selected to reduce transmission bandwidth requirements.

Optionally, for a terminal device that selects a Cat E split point as a data processing demarcation point, a dimension of a quantity of user beams may also be increased, and a quantity of most matched beams is selected based on measurement information for transmission.

Optionally, from a multi-cell perspective, for a scenario in which a user served by another cell is assisted, a CPRI split point may be selected as a data processing demarcation point.

In addition, in the foregoing implementation process, for the uplink service, the determining process of the split point may be performed by the baseband unit and indicated to the radio frequency unit through the baseband unit, so that the two units align the processing manner of the uplink data; or the determining process of the split point may be performed by the radio frequency unit and indicated to the baseband unit through the radio frequency unit, so that the two units align the processing manner of the uplink data. Then, the baseband unit may further process the uplink data. For example, the baseband unit may locally process the uplink data (or the baseband unit sends the uplink data to another device, for example, an access network device, a core network device, or another terminal device).

To implement functions in the methods provided in this application, the device performing the foregoing methods may include a hardware structure and/or a software module, and implement the functions in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

Refer to FIG. 9. This application provides a communication apparatus 900. The apparatus 900 includes a processing module 901 and a transceiver module 902.

In an implementation example, the communication apparatus 900 may implement a function of the baseband unit in the foregoing method, and therefore can also implement beneficial effects of the foregoing method. In this application, the communication apparatus 900 may be a baseband unit, or may be a software module, an integrated circuit, an element, or the like in the baseband unit, for example, a chip. This is not limited. The following uses an example in which the communication apparatus 900 is the baseband unit for description.

Specifically, the processing module 901 is configured to perform first processing on downlink data of a first terminal device to obtain first data, and perform second processing on downlink data of a second terminal device to obtain second data. The transceiver module 902 is configured to send the first data and the second data on a link between a baseband unit and a radio frequency unit. The first processing is different from the second processing.

In a possible implementation, the transceiver module 902 is further configured to send first indication information and second indication information, where the first indication information indicates that the first data is obtained by performing the first processing based on the downlink data of the first terminal device, and the second indication information indicates that the second data is obtained by performing the second processing based on the downlink data of the second terminal device.

In another implementation example, the communication apparatus 900 may implement a function of the radio frequency unit in the foregoing method, and therefore can also implement beneficial effects of the foregoing method. In this application, the communication apparatus 900 may be a radio frequency unit, or may be a software module, an integrated circuit, an element, or the like in the radio frequency unit, for example, a chip. This is not limited. The following uses an example in which the communication apparatus 900 is the radio frequency unit for description.

Specifically, the processing module 901 is configured to control the transceiver module 902 to receive first data and second data on a link between a baseband unit and a radio frequency unit, where the first data is obtained by performing first processing based on downlink data of a first terminal device, the second data is obtained by performing second processing based on downlink data of a second terminal device, and the first processing is different from the second processing.

In a possible implementation, the first processing and the second processing include physical layer processing; and/or the first processing and the second processing include data packet processing.

In a possible implementation, when the first processing and the second processing include data packet processing, a quantity of data packets corresponding to the first data is different from a quantity of data packets corresponding to the second data; and/or a time domain resource carrying a data packet corresponding to the first data is different from a time domain resource carrying a data packet corresponding to the second data.

In a possible implementation, the first processing is determined based on at least one of the following: a transmission code rate of the downlink data of the first terminal device, a type of the first terminal device, or channel state information of the first terminal device; and/or the second processing is determined based on at least one of the following: a transmission code rate of the downlink data of the second terminal device, a type of the second terminal device, or channel state information of the second terminal device.

In another implementation example, the communication apparatus 900 may implement a function of the radio frequency unit in the foregoing method, and therefore can also implement beneficial effects of the foregoing method. In this application, the communication apparatus 900 may be a radio frequency unit, or may be a software module, an integrated circuit, an element, or the like in the radio frequency unit, for example, a chip. This is not limited. The following uses an example in which the communication apparatus 900 is the radio frequency unit for description.

Specifically, the transceiver module 902 is configured to receive first data of a first terminal device and second data of a second terminal device on a link between a baseband unit and a radio frequency unit. The processing module 901 is configured to: perform third processing on the first data to obtain third data, and perform fourth processing on the second data to obtain fourth data, where the third processing is different from the fourth processing.

In a possible implementation, the third processing and the fourth processing include physical layer processing; and/or the third processing and the fourth processing include data packet processing.

In a possible implementation, when the third processing and the fourth processing include data packet processing, a quantity of data packets corresponding to the first data is different from a quantity of data packets corresponding to the second data; and/or a time domain resource carrying a data packet corresponding to the first data is different from a time domain resource carrying a data packet corresponding to the second data.

In a possible implementation, the third processing is determined based on at least one of the following: a transmission code rate of downlink data of the first terminal device, a type of the first terminal device, or channel state information of the first terminal device; and/or the fourth processing is determined based on at least one of the following: a transmission code rate of downlink data of the second terminal device, a type of the second terminal device, or channel state information of the second terminal device.

In a possible implementation, the physical layer processing includes at least one of the following: encoding, rate matching, scrambling, modulation, layer mapping, precoding, resource element RE mapping, digital beam mapping BF, inverse fast Fourier transform IFFT, cyclic prefix CP addition, digital-to-analog conversion, and analog BF.

In a possible implementation, the transceiver module is further configured to receive first indication information and second indication information, where the first indication information indicates that the first data is obtained by performing the first processing based on the downlink data of the first terminal device, and the second indication information indicates that the second data is obtained by performing the second processing based on the downlink data of the second terminal device.

In another implementation example, the communication apparatus 900 may implement a function of the radio frequency unit in the foregoing method, and therefore can also implement beneficial effects of the foregoing method. In this application, the communication apparatus 900 may be a radio frequency unit, or may be a software module, an integrated circuit, an element, or the like in the radio frequency unit, for example, a chip. This is not limited. The following uses an example in which the communication apparatus 900 is the radio frequency unit for description.

Specifically, the processing module 901 is configured to: perform fifth processing on uplink data of a first terminal device to obtain fifth data, and perform sixth processing on uplink data of a second terminal device to obtain sixth data. The transceiver module 902 is configured to send the fifth data and the sixth data on a link between a baseband unit and a radio frequency unit, where the fifth processing is different from the sixth processing.

In a possible implementation, the transceiver module 902 is further configured to: send first indication information and second indication information, where the first indication information indicates that the fifth data is obtained by performing the fifth processing based on the uplink data of the first terminal device, and the second indication information indicates that the sixth data is obtained by performing the sixth processing based on the uplink data of the second terminal device; or receive the first indication information and the second indication information.

In another implementation example, the communication apparatus 900 may implement a function of the baseband unit in the foregoing method, and therefore can also implement beneficial effects of the foregoing method. In this application, the communication apparatus 900 may be a baseband unit, or may be a software module, an integrated circuit, an element, or the like in the baseband unit, for example, a chip. This is not limited. The following uses an example in which the communication apparatus 900 is the baseband unit for description.

Specifically, the processing module 901 is configured to control the transceiver module 902 to receive fifth data and sixth data on a link between a baseband unit and a radio frequency unit, where the fifth data is obtained by performing fifth processing based on uplink data of a first terminal device, the sixth data is obtained by performing sixth processing based on uplink data of a second terminal device, and the fifth processing is different from the sixth processing.

In a possible implementation, the fifth processing and the sixth processing include physical layer processing; and/or the fifth processing and the sixth processing include data packet processing.

In a possible implementation, when the fifth processing and the sixth processing include data packet processing, a quantity of data packets corresponding to the fifth data is different from a quantity of data packets corresponding to the sixth data; and/or a time domain resource carrying a data packet corresponding to the fifth data is different from a time domain resource carrying a data packet corresponding to the sixth data.

In a possible implementation, the fifth processing is determined based on at least one of the following: a transmission code rate of the uplink data of the first terminal device, a type of the first terminal device, or channel state information of the first terminal device; and/or the sixth processing is determined based on at least one of the following: a transmission code rate of the uplink data of the second terminal device, a type of the second terminal device, or channel state information of the second terminal device.

In another implementation example, the communication apparatus 900 may implement a function of the baseband unit in the foregoing method, and therefore can also implement beneficial effects of the foregoing method. In this application, the communication apparatus 900 may be a baseband unit, or may be a software module, an integrated circuit, an element, or the like in the baseband unit, for example, a chip. This is not limited. The following uses an example in which the communication apparatus 900 is the baseband unit for description.

Specifically, the transceiver module 902 is configured to receive fifth data of a first terminal device and sixth data of a second terminal device on a link between a baseband unit and a radio frequency unit. The processing module 901 is configured to: perform seventh processing on the fifth data to obtain seventh data, and perform eighth processing on the sixth data to obtain eighth data, where the seventh processing is different from the eighth processing.

In a possible implementation, the seventh processing and the eighth processing include physical layer processing; and/or the seventh processing and the eighth processing include data packet processing.

In a possible implementation, when the seventh processing and the eighth processing include data packet processing, a quantity of data packets corresponding to the fifth data is different from a quantity of data packets corresponding to the sixth data; and/or a time domain resource carrying a data packet corresponding to the fifth data is different from a time domain resource carrying a data packet corresponding to the sixth data.

In a possible implementation, the seventh processing is determined based on at least one of the following: a transmission code rate of uplink data of the first terminal device, a type of the first terminal device, or channel state information of the first terminal device; and/or the eighth processing is determined based on at least one of the following: a transmission code rate of uplink data of the second terminal device, a type of the second terminal device, or channel state information of the second terminal device.

In a possible implementation, the physical layer processing includes at least one of the following: decoding, de-rate matching, descrambling, demodulation, inverse discrete Fourier transform IDFT, channel equalization, RE demapping, digital BF, fast Fourier transform FFT, CP removal, analog-to-digital conversion, or analog BF.

In a possible implementation, the transceiver module is further configured to receive first indication information and second indication information, where the first indication information indicates that the fifth data is obtained by performing the fifth processing based on the uplink data of the first terminal device, and the second indication information indicates that the sixth data is obtained by performing the sixth processing based on the uplink data of the second terminal device; or the transceiver module is further configured to send the first indication information and the second indication information.

It should be noted that, for details about content such as an information execution process of the units of the communication apparatus 900, refer to the descriptions in the foregoing method of this application. The details are not described herein again.

FIG. 10 is another diagram of a structure of a communication apparatus 1000 according to this application. The communication apparatus 1000 includes at least a logic circuit 1001. The communication apparatus 1000 may be a chip or an integrated circuit.

Optionally, the communication apparatus further includes an input/output interface 1002.

The transceiver module 902 shown in FIG. 9 may be a communication interface. The communication interface may be the input/output interface 1002 in FIG. 10, and the input/output interface 1002 may include an input interface and an output interface. Alternatively, the communication interface may be a transceiver circuit, and the transceiver circuit may include an input interface circuit and an output interface circuit.

Optionally, the logic circuit 1001 may be configured to: perform first processing on downlink data of a first terminal device to obtain first data, and perform second processing on downlink data of a second terminal device to obtain second data. The input/output interface 1002 is configured to send the first data and the second data on a link between a baseband unit and a radio frequency unit. The first processing is different from the second processing. It should be understood that the logic circuit 1001 and the input/output interface 1002 may further perform other steps performed by the baseband unit in any one of the foregoing examples, and implement corresponding beneficial effects. Details are not described herein again.

Optionally, the logic circuit 1001 is configured to control the input/output interface 1002 to receive first data and second data on a link between a baseband unit and a radio frequency unit, where the first data is obtained by performing first processing based on downlink data of a first terminal device, the second data is obtained by performing second processing based on downlink data of a second terminal device, and the first processing is different from the second processing. It should be understood that the logic circuit 1001 and the input/output interface 1002 may further perform other steps performed by the radio frequency unit in any one of the foregoing examples, and implement corresponding beneficial effects. Details are not described herein again.

Optionally, the input/output interface 1002 is configured to receive first data of a first terminal device and second data of a second terminal device on a link between a baseband unit and a radio frequency unit. The logic circuit 1001 is configured to: perform third processing on the first data to obtain third data, and perform fourth processing on the second data to obtain fourth data, where the third processing is different from the fourth processing. It should be understood that the logic circuit 1001 and the input/output interface 1002 may further perform other steps performed by the radio frequency unit in any one of the foregoing examples, and implement corresponding beneficial effects. Details are not described herein again.

Optionally, the logic circuit 1001 is configured to: perform fifth processing on uplink data of a first terminal device to obtain fifth data, and perform sixth processing on uplink data of a second terminal device to obtain sixth data. The input/output interface 1002 is configured to send the fifth data and the sixth data on a link between a baseband unit and a radio frequency unit. The fifth processing is different from the sixth processing. It should be understood that the logic circuit 1001 and the input/output interface 1002 may further perform other steps performed by the radio frequency unit in any one of the foregoing examples, and implement corresponding beneficial effects. Details are not described herein again.

Optionally, the logic circuit 1001 is configured to control the input/output interface 1002 to receive fifth data and sixth data on a link between a baseband unit and a radio frequency unit, where the fifth data is obtained by performing fifth processing based on uplink data of a first terminal device, the sixth data is obtained by performing sixth processing based on uplink data of a second terminal device, and the fifth processing is different from the sixth processing. It should be understood that the logic circuit 1001 and the input/output interface 1002 may further perform other steps performed by the baseband unit in any one of the foregoing examples, and implement corresponding beneficial effects. Details are not described herein again.

Optionally, the input/output interface 1002 is configured to receive fifth data of a first terminal device and sixth data of a second terminal device on a link between a baseband unit and a radio frequency unit. The logic circuit 1001 is configured to: perform seventh processing on the fifth data to obtain seventh data, and perform eighth processing on the sixth data to obtain eighth data, where the seventh processing is different from the eighth processing. It should be understood that the logic circuit 1001 and the input/output interface 1002 may further perform other steps performed by the baseband unit in any one of the foregoing examples, and implement corresponding beneficial effects. Details are not described herein again.

In a possible implementation, the processing module 901 shown in FIG. 9 may be the logic circuit 1001 in FIG. 10.

Optionally, the logic circuit 1001 may be a processing apparatus, and some or all of functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processing units (central processing unit, CPU), network processors (network processor, NP), digital signal processors (digital signal processor, DSP), micro controller units (micro controller unit, MCU), programmable logic devices (programmable logic device, PLD) or other integrated chips, or any combination of the foregoing chips or processors.

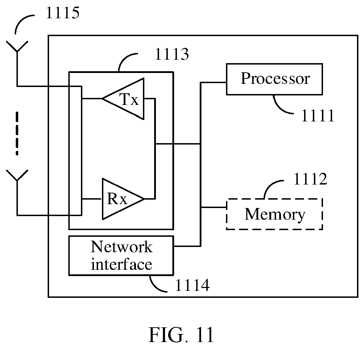

FIG. 11 is a diagram of a structure of a communication apparatus 1100 in the foregoing example according to this application. The communication apparatus 1100 may be specifically a communication apparatus used as a baseband unit or a radio frequency unit in the foregoing example. For a structure of the communication apparatus, refer to the structure shown in FIG. 11.

The communication apparatus 1100 includes at least one processor 1111 and at least one network interface 1114.

Optionally, the communication apparatus further includes at least one memory 1112, at least one transceiver 1113, and one or more antennas 1115. The processor 1111, the memory 1112, the transceiver 1113, and the network interface 1114 are connected, for example, connected through a bus. In this application, the connection may include various types of interfaces, transmission lines, buses, or the like. This is not limited in this application. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The processor 1111 is mainly configured to: process a communication protocol and communication data, control the entire communication apparatus, execute a software program, and process data of the software program, for example, is configured to support the communication apparatus in performing actions described in the foregoing implementation process. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1111 in FIG. 11. A person skilled in the art may understand that the baseband processor and the central processing unit each may be an independent processor, and are interconnected by using a technology such as a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor; or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 may be integrated with the processor 1111, for example, integrated into a chip. The memory 1112 can store program code for executing the technical solutions in this application, and the processor 1111 controls the execution. Various types of executed computer program code may also be considered as a driver of the processor 1111.

FIG. 11 merely shows one memory and one processor. In an actual network device, there may be a plurality of processors and a plurality of memories. The memory may also be referred to as a storage medium, a storage device, or the like. The memory may be a storage element located on a same chip as the processor, that is, an on-chip storage element, or an independent storage element. This is not limited in this application.

The transceiver 1113 may be configured to support receiving or sending of a radio frequency signal between the communication apparatus and the terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to: receive the radio frequency signal from the antenna, convert the radio frequency signal into a digital baseband signal or a digital intermediate frequency signal, and provide the digital baseband signal or the digital intermediate frequency signal to the processor 1111, so that the processor 1111 performs further processing, for example, demodulation and decoding, on the digital baseband signal or the digital intermediate frequency signal. In addition, the transmitter Tx of the transceiver 1113 is further configured to: receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down mixing processing and analog-to-digital conversion processing on the radio frequency signal, to obtain a digital baseband signal or a digital intermediate frequency signal. A sequence of the down mixing processing and the analog-to-digital conversion processing is adjustable. The transmitter Tx may selectively perform one-level or multi-level up mixing processing and digital-to-analog conversion processing on the modulated digital baseband signal or digital intermediate frequency signal, to obtain a radio frequency signal. A sequence of the up mixing processing and the digital-to-analog conversion processing is adjustable. The digital baseband signal and the digital intermediate frequency signal may be collectively referred to as a digital signal.

The transceiver 1113 may also be referred to as a transceiver module, a transceiver machine, a transceiver apparatus, or the like. Optionally, a device that is in the transceiver module and that is configured to implement a receiving function may be considered as a receiving unit, and a device that is in the transceiver module and that is configured to implement a sending function may be considered as a sending unit. In other words, the transceiver module includes the receiving unit and the sending unit. The receiving unit may also be referred to as a receiver, an input port, a receiving circuit, or the like. The sending unit may be referred to as a transmitter, a transmitter machine, a transmitter circuit, or the like.

It should be noted that the communication apparatus 1100 shown in FIG. 11 may be specifically configured to: implement steps implemented by the baseband unit or the radio frequency unit in the foregoing method, and implement technical effects corresponding to the baseband unit or the radio frequency unit. For specific implementations of the communication apparatus 1100 shown in FIG. 11, refer to the descriptions in the foregoing method. Details are not described herein again.

Division into modules in this application is an example, is merely logical function division, and may be other division in an actual implementation. In addition, functional modules in this application may be integrated into one processor, or may exist alone physically, or two or more modules may be integrated into one module. The integrated module may be implemented in a form of hardware, or may be implemented in a form of a software functional module.

All or some of the technical solutions provided in this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
performing first processing on downlink data of a first terminal device to obtain first data, and performing second processing on downlink data of a second terminal device to obtain second data; and
sending the first data and the second data on a link between a baseband unit and a radio frequency unit, wherein
the first processing is different from the second processing.

2. The method according to claim 1, wherein the method further comprises:
sending first indication information and second indication information, wherein the first indication information indicates that the first data is obtained by performing the first processing based on the downlink data of the first terminal device, and the second indication information indicates that the second data is obtained by performing the second processing based on the downlink data of the second terminal device.

3. A communication method, comprising:
receiving first data and second data on a link between a baseband unit and a radio frequency unit, wherein the first data is obtained by performing first processing based on downlink data of a first terminal device, and the second data is obtained by performing second processing based on downlink data of a second terminal device; and
the first processing is different from the second processing.

4. The method according to any one of claims 1 to 3, wherein
the first processing and the second processing comprise physical layer processing;
and/or
the first processing and the second processing comprise data packet processing.

5. The method according to claim 4, wherein when the first processing and the second processing comprise data packet processing, a quantity of data packets corresponding to the first data is different from a quantity of data packets corresponding to the second data; and/or a time domain resource carrying a data packet corresponding to the first data is different from a time domain resource carrying a data packet corresponding to the second data.

6. The method according to any one of claims 1 to 5, wherein
the first processing is determined based on at least one of the following: a transmission code rate of the downlink data of the first terminal device, a type of the first terminal device, or channel state information of the first terminal device;
and/or
the second processing is determined based on at least one of the following: a transmission code rate of the downlink data of the second terminal device, a type of the second terminal device, or channel state information of the second terminal device.

7. A communication method, comprising:
receiving first data of a first terminal device and second data of a second terminal device on a link between a baseband unit and a radio frequency unit; and
performing third processing on the first data to obtain third data, and performing fourth processing on the second data to obtain fourth data, wherein the third processing is different from the fourth processing.

8. The method according to claim 7, wherein
the third processing and the fourth processing comprise physical layer processing;
and/or
the third processing and the fourth processing comprise data packet processing.

9. The method according to claim 8, wherein when the third processing and the fourth processing comprise data packet processing, a quantity of data packets corresponding to the first data is different from a quantity of data packets corresponding to the second data; and/or a time domain resource carrying a data packet corresponding to the first data is different from a time domain resource carrying a data packet corresponding to the second data.

10. The method according to any one of claims 7 to 9, wherein
the third processing is determined based on at least one of the following: a transmission code rate of downlink data of the first terminal device, a type of the first terminal device, or channel state information of the first terminal device;
and/or
the fourth processing is determined based on at least one of the following: a transmission code rate of downlink data of the second terminal device, a type of the second terminal device, or channel state information of the second terminal device.

11. The method according to any one of claims 4 to 6 or any one of claims 8 to 10, wherein the physical layer processing comprises at least one of the following:
encoding, rate matching, scrambling, modulation, layer mapping, precoding, resource element RE mapping, digital beam mapping BF, inverse fast Fourier transform IFFT, cyclic prefix CP addition, digital-to-analog conversion, or analog BF.

12. The method according to any one of claims 3 to 11, wherein the method further comprises:
receiving the first indication information and the second indication information, wherein the first indication information indicates that the first data is obtained by performing the first processing based on the downlink data of the first terminal device, and the second indication information indicates that the second data is obtained by performing the second processing based on the downlink data of the second terminal device.

13. A communication apparatus, comprising a processing module and a transceiver module, wherein
the processing module and the transceiver module are configured to perform the method according to any one of claims 1 and 2, 4 to 6, and 11 and 12; or the processing module and the transceiver module are configured to perform the method according to any one of claims 3 to 12.

14. A communication apparatus, comprising at least one processor and a memory, wherein the at least one processor is coupled to the memory; and
the processor is configured to perform the method according to any one of claims 1 and 2, 4 to 6, and 11 and 12; or the processor is configured to perform the method according to any one of claims 3 to 12.

15. A communication system, comprising a communication apparatus configured to perform the method according to any one of claims 1 and 2, 4 to 6, and 11 and 12, and a communication apparatus configured to perform the method according to any one of claims 3 to 12.

16. A computer-readable storage medium, wherein the medium stores instructions, and when the instructions are executed by a computer, the method according to any one of claims 1 to 12 is implemented.

17. A computer program product, comprising instructions, wherein when the instructions are run on a computer, the computer is enabled to perform the method according to any one of claims 1 to 12.

18. A communication method, comprising:
performing fifth processing on uplink data of a first terminal device to obtain fifth data, and performing sixth processing on uplink data of a second terminal device to obtain sixth data; and
sending the fifth data and the sixth data on a link between a baseband unit and a radio frequency unit, wherein
the fifth processing is different from the sixth processing.

19. The method according to claim 18, wherein the method further comprises:
sending first indication information and second indication information, wherein the first indication information indicates that the fifth data is obtained by performing the fifth processing based on the uplink data of the first terminal device, and the second indication information indicates that the sixth data is obtained by performing the sixth processing based on the uplink data of the second terminal device;
or
receiving the first indication information and the second indication information.

20. A communication method, comprising:
receiving fifth data and sixth data on a link between a baseband unit and a radio frequency unit, wherein the fifth data is obtained by performing fifth processing based on uplink data of a first terminal device, and the sixth data is obtained by performing sixth processing based on uplink data of a second terminal device; and
the fifth processing is different from the sixth processing.

21. The method according to any one of claims 18 to 20, wherein
the fifth processing and the sixth processing comprise physical layer processing;
and/or
the fifth processing and the sixth processing comprise data packet processing.

22. The method according to claim 21, wherein when the fifth processing and the sixth processing comprise data packet processing, a quantity of data packets corresponding to the fifth data is different from a quantity of data packets corresponding to the sixth data; and/or a time domain resource carrying a data packet corresponding to the fifth data is different from a time domain resource carrying a data packet corresponding to the sixth data.

23. The method according to any one of claims 18 to 22, wherein
the fifth processing is determined based on at least one of the following: a transmission code rate of the uplink data of the first terminal device, a type of the first terminal device, or channel state information of the first terminal device;
and/or
the sixth processing is determined based on at least one of the following: a transmission code rate of the uplink data of the second terminal device, a type of the second terminal device, or channel state information of the second terminal device.

24. A communication method, comprising:
receiving fifth data of a first terminal device and sixth data of a second terminal device on a link between a baseband unit and a radio frequency unit; and
performing seventh processing on the fifth data to obtain seventh data, and performing eighth processing on the sixth data to obtain eighth data, wherein the seventh processing is different from the eighth processing.

25. The method according to claim 24, wherein
the seventh processing and the eighth processing comprise physical layer processing;
and/or
the seventh processing and the eighth processing comprise data packet processing.

26. The method according to claim 25, wherein when the seventh processing and the eighth processing comprise data packet processing, a quantity of data packets corresponding to the fifth data is different from a quantity of data packets corresponding to the sixth data; and/or a time domain resource carrying a data packet corresponding to the fifth data is different from a time domain resource carrying a data packet corresponding to the sixth data.

27. The method according to any one of claims 24 to 26, wherein
the seventh processing is determined based on at least one of the following: a transmission code rate of uplink data of the first terminal device, a type of the first terminal device, or channel state information of the first terminal device;
and/or
the eighth processing is determined based on at least one of the following: a transmission code rate of uplink data of the second terminal device, a type of the second terminal device, or channel state information of the second terminal device.

28. The method according to any one of claims 21 to 23 or any one of claims 25 to 27, wherein the physical layer processing comprises at least one of the following:
decoding, de-rate matching, descrambling, demodulation, inverse discrete Fourier transform IDFT, channel equalization, RE demapping, digital BF, fast Fourier transform FFT, CP removal, analog-to-digital conversion, or analog BF.

29. The method according to any one of claims 20 to 28, wherein the method further comprises:
receiving first indication information and second indication information, wherein the first indication information indicates that the fifth data is obtained by performing the fifth processing based on the uplink data of the first terminal device, and the second indication information indicates that the sixth data is obtained by performing the sixth processing based on the uplink data of the second terminal device;
or
sending the first indication information and the second indication information.

30. A communication apparatus, comprising a processing module and a transceiver module, wherein
the processing module and the transceiver module are configured to perform the method according to any one of claims 18 and 19, 21 to 23, and 28 and 29; or the processing module and the transceiver module are configured to perform the method according to any one of claims 20 to 29.

31. A communication apparatus, comprising at least one processor and a memory, wherein the at least one processor is coupled to the memory; and
the processor is configured to perform the method according to any one of claims 18 and 19, 21 to 23, and 28 and 29; or the processor is configured to perform the method according to any one of claims 20 to 29.

32. A communication system, comprising a communication apparatus configured to perform the method according to any one of claims 18 and 19, 21 to 23, and 28 and 29, and a communication apparatus configured to perform the method according to any one of claims 20 to 29.

33. A computer-readable storage medium, wherein the medium stores instructions, and when the instructions are executed by a computer, the method according to any one of claims 18 to 29 is implemented.

34. A computer program product, comprising instructions, wherein when the instructions are run on a computer, the computer is enabled to perform the method according to any one of claims 18 to 29.
